# EUROPEAN PATENT APPLICATION

(11) **EP 3 995 554 A1**
(43) Date of publication of application: **11.05.2022**
(21) Application number: 20836496.8
(22) Date of filing: 17.06.2020
(51) Int. Cl.: C09K 3/18, C08G 65/336

(54) **SURFACE TREATMENT AGENT**

(30) Priority: 05.07.2019 JP 2019126387
(71) Applicant: Daikin Industries, Ltd., Osaka-shi, Osaka 530-8323 (JP)
(72) Inventor: YAMASHITA, Tsuneo, Osaka-shi, Osaka 530-8323 (JP); MAEHIRA, Takeshi, Osaka-shi, Osaka 530-8323 (JP); KATSUKAWA, Kenichi, Osaka-shi, Osaka 530-8323 (JP); MITSUHASHI, Hisashi, Osaka-shi, Osaka 530-8323 (JP)
(74) Representative: Hoffmann Eitle
(86) International application number: PCT/JP2020/023737
(87) International publication number: WO 2021/005981

(57) **Abstract**

The present invention provides a surface-treating agent comprising a component (A): at least one fluoropolyether group-containing compound of formula (1A) or (2A); and a component (B): at least one fluoropolyether group-containing compound of the following formula (1B) or (2B); and a component (C): one or more fluorine-containing oils.

**Rf^{1A} _{α1} - X^{A} - R^{A} _{β1}** **(1A)**

**R^{A} _{γ1} - X^{A} - Rf^{2A} - X^{A} - R^{A} _{γ1}** **(2A)**

**Rf^{1B} _{α2} - X^{B} - R^{B} _{β2}** **(1B)**

**R^{B} _{γ2} - X^{B} - Rf^{2B} - X^{B} - R^{B} _{γ2}** **(2B)**

## Description

### Technical Field

The present disclosure relates to a surface-treating agent.

### Background Art

Certain types of fluorine-containing silane compounds are known to be capable of providing excellent water-repellency, oil-repellency, antifouling property, and the like when used in surface treatment of a substrate. A layer obtained from a surface-treating agent containing a fluorine-containing silane compound (hereinafter, also referred to as a "surface-treating layer") is applied as a so-called functional thin film to a large variety of substrates such as glass, plastics, fibers, sanitary goods, and building materials (Patent Literatures 1 and 2).

### Citation List

### Patent Literature

Patent Literature 1: JP 2014-218639 A
Patent Literature 2: JP 2017-082194 A

### Summary of Invention

### Technical Problem

The fluorine-containing silane compound described in Patent Literature 1 or Patent Literature 2 can provide a surface-treating layer having an excellent function, but a surface-treating layer having higher friction durability and chemical resistance is required.

An object of the present disclosure is to provide an article having a surface-treating layer having higher friction durability and chemical resistance.

### Solution to Problem

The present disclosure includes the following embodiments.
[1] A surface-treating agent comprising:
   a component (A): at least one fluoropolyether group-containing compound of the following formula (1A) or (2A):

      Rf^{1A}_{α1} - X^{A} - R^{A}_{β1} (1A)

      R^{A}_{γ1} - X^{A} - Rf^{2A} - X^{A} - R^{A}_{γ1} (2A)

      wherein
      Rf^{1A} is each independently at each occurrence Rf¹-R^{F}-O_{q}-;
      Rf^{2A} is -Rf²ₚ-R^{F}-O_{q}-;
      Rf¹ is each independently at each occurrence a C₁₋₁₆ alkyl group optionally substituted with one or more fluorine atoms;
      Rf² is a C₁₋₆ alkylene group optionally substituted with one or more fluorine atoms;
      R^{F} is each independently at each occurrence a divalent fluoropolyether group;
      p is 0 or 1;
      q is each independently at each occurrence 0 or 1;
      R^{A} is each independently at each occurrence a group represented by the following formula (S1):

         - CR^{d1}ₖ₂R^{e1}ₗ₂R^{f1}ₘ₂ (S1 )

         wherein
         R^{d1} is each independently at each occurrence -Z²-CR³¹ₚ₂R³²_{q2}R³³ᵣ₂;
         Z² is each independently at each occurrence a single bond, an oxygen atom, or a divalent organic group;
         R³¹ is each independently at each occurrence -Z²'-CR^{32'}_{q2'}R^{33'}_{r2'};
         R³² is each independently at each occurrence -Z³-SiR³⁴ₙ₂R³⁵₃₋ₙ₂;
         R³³ is each independently at each occurrence a hydrogen atom, a hydroxyl group, or a monovalent organic group;
         p2 is each independently at each occurrence an integer of 0 to 3;
         q2 is each independently at each occurrence an integer of 0 to 3;
         r2 is each independently at each occurrence an integer of 0 to 3;
         Z^{2'} is each independently at each occurrence a single bond, an oxygen atom, or a divalent organic group;
         R^{32'} is each independently at each occurrence -Z³-SiR³⁴ₙ₂R³⁵₃₋ₙ₂;
         R^{33'} is each independently at each occurrence a hydrogen atom, a hydroxyl group, or a monovalent organic group;
         q2' is each independently at each occurrence an integer of 0 to 3;
         r2' is each independently at each occurrence an integer of 0 to 3;
         Z³ is each independently at each occurrence a single bond, an oxygen atom, or a divalent organic group;
         R³⁴ is each independently at each occurrence a hydroxyl group or a hydrolyzable group;
         R³⁵ is each independently at each occurrence a hydrogen atom or a monovalent organic group;
         n2 is each independently at each occurrence an integer of 0 to 3;
         R^{e1} is each independently at each occurrence -Z³-SiR³⁴ₙ₂R³⁵₃₋ₙ₂;
         R^{f1} is each independently at each occurrence a hydrogen atom, a hydroxyl group, or a monovalent organic group;
         k2 is each independently at each occurrence an integer of 0 to 3;
         12 is each independently at each occurrence an integer of 0 to 3; and
         m2 is each independently at each occurrence an integer of 0 to 3;
         at least one R^{A} is a monovalent group containing a Si atom to which a hydroxyl group or a hydrolyzable group is bonded;
         X^{A} is each independently a single bond or a di- to decavalent organic group;
         α1 is an integer of 1 to 9;
         β1 is an integer of 1 to 9; and
         γ1 is each independently an integer of 1 to 9;
         a component (B): at least one fluoropolyether group-containing compound represented by the following formula (1B) or (2B):

            Rf^{1B}_{α2} - X^{B} - R^{B}_{β2} (1B)

            R^{B}_{γ2} - X^{B} - Rf^{2B} - X^{B} - R^{B}_{γ2} (2B)

            wherein
            Rf^{1B} is each independently at each occurrence Rf¹-R^{F}-O_{q}-;
            Rf^{2B} is -Rf²ₚ-R^{F}-O_{q}-;
            Rf¹ is each independently at each occurrence a C₁₋₁₆ alkyl group optionally substituted with one or more fluorine atoms;
            Rf² is a C₁₋₆ alkylene group optionally substituted with one or more fluorine atoms;
            R^{F} is each independently at each occurrence a divalent fluoropolyether group;
            p is 0 or 1;
            q is each independently at each occurrence 0 or 1;
            R^{B} is each independently at each occurrence a group represented by the following formula (S2): 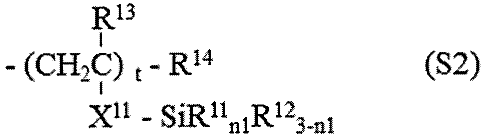 wherein
               R¹¹ is each independently at each occurrence a hydroxyl group or a hydrolyzable group;
               R¹² is each independently at each occurrence a hydrogen atom or a monovalent organic group;
               n1 is each independently an integer of 0 to 3 in each (SiR¹¹ₙ₁R¹²₃₋ₙ₁) unit;
               X¹¹ is each independently at each occurrence a single bond or a divalent organic group;
               R¹³ is each independently at each occurrence a hydrogen atom or a monovalent organic group;
               t is each independently at each occurrence an integer of 2 to 10; and
               R¹⁴ is each independently at each occurrence a hydrogen atom or a halogen atom;
               at least one R^{B} is a monovalent group containing a Si atom to which a hydroxyl group or a hydrolyzable group is bonded;
               X^{B} is each independently a single bond or a di- to decavalent organic group;
               α2 is an integer of 1 to 9;
               β2 is an integer of 1 to 9; and
               γ2 is each independently an integer of 1 to 9; and
               a component (C): one or more fluorine-containing oils.
[2] The surface-treating agent according to [1], wherein 12 is 2 and m2 is 1, or 12 is 3.
[3] The surface-treating agent according to [1] or [2], wherein 12 is 3.
[4] The surface-treating agent according to any one of [1] to [3], wherein R^{F} is each independently at each occurrence a group of the formula:

   -(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

   wherein R^{Fa} is each independently at each occurrence a hydrogen atom, a fluorine atom, or a chlorine atom; and
   a, b, c, d, e and f are each independently an integer of 0 to 200, the sum of a, b, c, d, e and f is 1 or more, and the occurrence order of the respective repeating units enclosed in parentheses provided with a, b, c, d, e or f is not limited in the formula.
[5] The surface-treating agent according to [4], wherein R^{Fa} is a fluorine atom.
[6] The surface-treating agent according to any one of [1] to [5], wherein R^{F} is each independently at each occurrence a group of the following formula (f1), (f2), (f3), (f4), or (f5):

   -(OC₃F₆)_{d}- (f1)

   wherein d is an integer of 1 to 200;

   -(OC₄F₈)_{c}-(OC₃F₆)_{d}-(OC₂F₄)ₑ-(OCF₂)_{f}- (f2)

   wherein c and d are each independently an integer of 0 to 30;
   e and f are each independently an integer of 1 to 200;
   the sum of c, d, e, and f is an integer of 10 to 200; and
   the occurrence order of the respective repeating units enclosed in parentheses provided with a subscript c, d, e, or f is not limited in the formula;

      -(R⁶-R⁷)_{g}- (f3)

      wherein R⁶ is OCF₂ or OC₂F₄;
   R⁷ is a group selected from OC₂F₄, OC₃F₆, OC₄F₈, OC₅F₁₀, and OC₆F₁₂, or is a combination of two or three groups selected from these groups; and
   g is an integer of 2 to 100;

      -(OC₆F₁₂)ₐ-(OC₅F₁₀)_{b}-(OC₄F₈)_{c}-(OC₃F₆)_{d}-(OC₂F₄)ₑ-(OCF₂)_{f}- (f4)

      wherein e is an integer of 1 or more and 200 or less, a, b, c, d, and f are each independently an integer of 0 or more and 200 or less, and the occurrence order of the respective repeating units enclosed in parentheses provided with a, b, c, d, e, or f is not limited in the formula; and

      - (OC₆F₁₂)ₐ-(OC₅F₁₀)_{b}-(OC₄F₈)_{c}-(OC₃F₆)_{d}-(OC₂F₄)ₑ-(OCF₂)_{f}- (f5)

      wherein f is an integer of 1 or more and 200 or less, a, b, c, d, and e are each independently an integer of 0 or more and 200 or less, and the occurrence order of the respective repeating units enclosed in parentheses provided with a, b, c, d, e, or f is not limited in the formula.
[7] The surface-treating agent according to any one of [1] to [6], wherein in the formulas (1A) and (2A), R^{F} is each independently at each occurrence a group of the formula (f2):

   -(OC₄F₈)_{c}-(OC₃F₆)_{d}-(OC₂F₄)ₑ-(OCF₂)_{f}- (f2)

   wherein c and d are each independently an integer of 0 to 30;
   e and f are each independently an integer of 1 to 200;
   the sum of c, d, e, and f is an integer of 10 to 200; and
   the occurrence order of the respective repeating units enclosed in parentheses provided with a subscript c, d, e, or f is not limited in the formula, and
   in the formulas (1B) and (2B), R^{F} is each independently at each occurrence a group represented by the formula (f1):

      -(OC₃F₆)_{d}- (f1)
   wherein d is an integer of 1 to 200.
[8] The surface-treating agent according to any one of [1] to [7], wherein α1, β1, and γ1 are 1, and α2, β2, and γ2 are 1.
[9] The surface-treating agent according to any one of [1] to [8], wherein the fluorine-containing oil is a perfluoro(poly)ether compound of the following formula (C):

   Rf⁵-(OC₄F₈)_{a'}-(OC₃F₆)_{b'}-(OC₂F₄)_{c'}-(OCF₂)_{d'}-Rf⁶ ... (C)

   wherein
   Rf⁵ represents an alkyl group having 1 to 16 carbon atoms optionally substituted with one or more fluorine atoms;
   Rf⁶ represents an alkyl group having 1 to 16 carbon atoms optionally substituted with one or more fluorine atoms, a fluorine atom, or a hydrogen atom; and
   a', b', c', and d' are each independently an integer of 0 or more and 300 or less, the sum of a', b', c', and d' is at least 1, and the occurrence order of the respective repeating units enclosed in parentheses provided with a subscript a', b', c', or d' is not limited in the formula.
[10] The surface-treating agent according to any one of [1] to [9], wherein a content of the component (A) is 40 to 90% by mass based on a total of the component (A), the component (B), and the component (C) in the surface-treating agent.
[11] The surface-treating agent according to any one of [1] to [10], wherein, based on a total of the component (A), the component (B), and the component (C) in the surface-treating agent,
   a content of the component (A) is 40 to 80% by mass;
   a content of the component (B) is 5 to 20% by mass; and
   a content of the component (C) is 10 to 30% by mass.
[12] The surface-treating agent according to any one of [1] to [11], further comprising one or more other components selected from a silicone oil and a catalyst.
[13] The surface-treating agent according to any one of [1] to [12], further comprising a solvent.
[14] The surface-treating agent according to any one of [1] to [13], which is used as an antifouling coating agent or a water-proof coating agent.
[15] The surface-treating agent according to any one of [1] to [14], which is for vacuum deposition.
[16] A pellet comprising the surface-treating agent according to any one of [1] to [15].
[17] An article comprising: a substrate; and a layer on a surface of the substrate, wherein the layer is formed of the surface-treating agent according to any one of [1] to [15].

### Advantageous Effect of Invention

According to the present disclosure, it is possible to provide an article having a surface-treating layer having higher friction durability.

### Description of Embodiments

The term "monovalent organic group", as used herein, refers to a monovalent group containing carbon. The monovalent organic group is not limited, and may be a hydrocarbon group or a derivative thereof. The derivative of hydrocarbon group refers to a group that has one or more of N, O, S, Si, amide, sulfonyl, siloxane, carbonyl, carbonyloxy, and the like at the terminal or in the molecular chain of the hydrocarbon group. The term "organic group" refers to a monovalent organic group. The term "di- to decavalent organic group" refers to a di- to decavalent group containing carbon. Examples of such a di- to decavalent organic group include, but are not limited to, a di- to decavalent group obtained by further removing 1 to 9 hydrogen atoms from an organic group. For example, the divalent organic group may be, but is not limited to, a divalent group obtained by further removing one hydrogen atom from an organic group.

The term "hydrocarbon group", as used herein, refers to a group that contains a carbon and a hydrogen and that is obtained by removing one hydrogen atom from a hydrocarbon. Such a hydrocarbon group is not limited, and examples thereof include a C₁₋₂₀ hydrocarbon group, such as an aliphatic hydrocarbon group and an aromatic hydrocarbon group, optionally substituted with one or more substituents. The "aliphatic hydrocarbon group" may be either linear, branched, or cyclic, and may be either saturated or unsaturated. The hydrocarbon group may contain one or more ring structures.

As used herein, examples of the substituent of the "hydrocarbon group" include, but are not limited to, one or more groups selected from a halogen atom; and a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5 to 10-membered heterocyclyl group, a 5 to 10-membered unsaturated heterocyclyl group, a C₆₋₁₀ aryl group, and a 5 to 10-membered heteroaryl group, each of which is optionally substituted with one or more halogen atoms.

A surface-treating agent of the present disclosure comprises:
a component (A): at least one fluoropolyether group-containing compound of the formula (1A) or (2A);
a component (B): at least one fluoropolyether group-containing compound of the formula (1B) or (2B); and
a component (C): one or more fluorine-containing oils.

The surface-treating agent of the present disclosure has higher friction durability by including component (A), component (B), and component (C).

### (Component (A): fluoropolyether group-containing compound)

The fluoropolyether group-containing compound is at least one fluoropolyether group-containing compound of the following formula (1A) or (2A):

Rf^{1A} _{α1} - X^{A} - R^{A} _{β1} (1A)

R^{A}_{γ1} - X^{A} - Rf^{2A} - X^{A} - R^{A}_{γ1} (2A)

wherein
Rf^{1A} is each independently at each occurrence Rf¹-R^{F}-O_{q}-;
Rf^{2A} is -Rf²ₚ-R^{F}-O_{q}-;
Rf¹ is each independently at each occurrence a C₁₋₁₆ alkyl group optionally substituted with one or more fluorine atoms;
Rf² is a C₁₋₆ alkylene group optionally substituted with one or more fluorine atoms;
R^{F} is each independently at each occurrence a divalent fluoropolyether group;
p is 0 or 1;
q is each independently at each occurrence 0 or 1;
R^{A} is each independently at each occurrence a group of the following formula (S1):

   -CR^{d1}ₖ₂R^{e1}₁₂R^{f1}ₘ₂ (S1)

   wherein
   R^{d1} is each independently at each occurrence -Z²-CR³¹ₚ₂R³²_{q2}R³³ᵣ₂ ;
   Z² is each independently at each occurrence a single bond, an oxygen atom, or a divalent organic group;
   R³¹ is each independently at each occurrence -Z^{2'}-CR^{32'}_{q2'}R^{33'}_{r2'};
   R³² is each independently at each occurrence -Z³-SiR³⁴ₙ₂R³⁵₃₋ₙ₂;
   R³³ is each independently at each occurrence a hydrogen atom, a hydroxyl group, or a monovalent organic group;
   p2 is each independently at each occurrence an integer of 0 to 3;
   q2 is each independently at each occurrence an integer of 0 to 3;
   r2 is each independently at each occurrence an integer of 0 to 3;
   Z^{2'} is each independently at each occurrence a single bond, an oxygen atom, or a divalent organic group;
   R^{32'} is each independently at each occurrence -Z³-SiR³⁴ₙ₂R³⁵₃₋ₙ₂;
   R^{33'} is each independently at each occurrence a hydrogen atom, a hydroxyl group, or a monovalent organic group;
   q2' is each independently at each occurrence an integer of 0 to 3;
   r2' is each independently at each occurrence an integer of 0 to 3;
   Z³ is each independently at each occurrence a single bond, an oxygen atom, or a divalent organic group;
   R³⁴ is each independently at each occurrence a hydroxyl group or a hydrolyzable group;
   R³⁵ is each independently at each occurrence a hydrogen atom or a monovalent organic group;
   n2 is each independently at each occurrence an integer of 0 to 3;
   R^{e1} is each independently at each occurrence -Z³-SiR³⁴ₙ₂R³⁵₃₋ₙ₂;
   R^{f1} is each independently at each occurrence a hydrogen atom, a hydroxyl group, or a monovalent organic group;
   k2 is each independently at each occurrence an integer of 0 to 3;
   12 is each independently at each occurrence an integer of 0 to 3; and
   m2 is each independently at each occurrence an integer of 0 to 3;
   at least one R^{A} is a monovalent group containing a Si atom to which a hydroxyl group or a hydrolyzable group is bonded;
   X^{A} is each independently a single bond or a di- to decavalent organic group;
   α1 is an integer of 1 to 9;
   β1 is an integer of 1 to 9; and
   γ1 is each independently an integer of 1 to 9.

In the formula, Rf^{1A} is each independently at each occurrence Rf¹-_{R}^{F}-Oq-.

In the formula, Rf^{2A} is -Rf²ₚ-_{R}F-Oq-.

Rf¹ is each independently at each occurrence a C₁₋₁₆ alkyl group optionally substituted with one or more fluorine atoms.

In the C₁₋₁₆ alkyl group optionally substituted with one or more fluorine atoms, the "C₁₋₁₆ alkyl group" may be linear or branched, and is preferably a linear or branched C₁₋₆ alkyl group, in particular C₁₋₃ alkyl group, and more preferably a linear C₁₋₆ alkyl group, in particular C₁₋₃ alkyl group.

Rf¹ is preferably a C₁₋₁₆ alkyl group substituted with one or more fluorine atoms, more preferably a CF₂H-C₁₋₁₅ perfluoroalkylene group, and still more preferably a C₁₋₁₆ perfluoroalkyl group.

The C₁₋₁₆ perfluoroalkyl group may be linear or branched, and is preferably a linear or branched C₁₋₆ perfluoroalkyl group, in particular C₁₋₃ perfluoroalkyl group, more preferably a linear C₁₋₆ perfluoroalkyl group, in particular C₁₋₃ perfluoroalkyl group, and specifically -CF₃, -CF₂CF₃, or -CF₂CF₂CF₃.

In the formula, Rf² is a C₁₋₆ alkylene group optionally substituted with one or more fluorine atoms.

In the C₁₋₆ alkylene group optionally substituted with one or more fluorine atoms, the "C₁₋₆ alkylene group" may be linear or branched, and is preferably a linear or branched C₁₋₃ alkylene group, and more preferably a linear C₁₋₃ alkylene group.

Rf² is preferably a C₁₋₆ alkylene group substituted with one or more fluorine atoms, more preferably a C₁₋₆ perfluoroalkylene group, and still more preferably a C₁₋₃ perfluoroalkylene group.

The C₁₋₆ perfluoroalkylene group may be linear or branched, and is preferably a linear or branched C₁₋₃ perfluoroalkylene group, more preferably a linear C₁₋₃ perfluoroalkylene group, and specifically -CF₂-, -CF₂CF₂-, or -CF₂CF₂CF₂-.

p is 0 or 1. In one embodiment, p is 0. In another embodiment, p is 1.

q is each independently at each occurrence 0 or 1. In one embodiment, q is 0. In another embodiment, q is 1.

R^{F} is each independently at each occurrence a divalent fluoropolyether group.

R^{F} is preferably a group of the following formula:

-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

wherein
R^{Fa} is each independently at each occurrence a hydrogen atom, a fluorine atom, or a chlorine atom;
a, b, c, d, e, and f are each independently an integer of 0 to 200, and the sum of a, b, c, d, e, and f is one or more; and the occurrence order of the respective repeating units enclosed in parentheses provided with a, b, c, d, e, or f is not limited in the formula.

R^{Fa} is preferably a hydrogen atom or a fluorine atom, and more preferably a fluorine atom.

Preferably, a, b, c, d, e, and f may each independently be an integer of 0 to 100.

The sum of a, b, c, d, e, and f is preferably 5 or more, and more preferably 10 or more, and may be, for example, 15 or more or 20 or more. The sum of a, b, c, d, e, and f is preferably 200 or less, more preferably 100 or less, and still more preferably 60 or less, and may be, for example, 50 or less or 30 or less.

These repeating units may be linear or branched. For example, as the repeating unit, -(OC₆F₁₂)- may be - (OCF₂CF₂CF₂CF₂CF₂CF₂)-, - (OCF(CF₃)CF₂CF₂CF₂CF₂)-, - (OCF₂CF(CF₃)CF₂CF₂CF₂)-, -(OCF₂CF₂CF(CF₃)CF₂CF₂)-, - (OCF₂CF₂CF₂CF(CF₃)CF₂)-, -(OCF₂CF₂CF₂CF₂CF(CF₃))-, or the like. -(OC₅F₁₀)- may be -(OCF₂CF₂CF₂CF₂CF₂)-, - (OCF (CF₃)CF₂CF₂CF₂)-, - (OCF₂CF(CF₃)CF₂CF₂)-, - (OCF₂CF₂CF(CF₃)CF₂)-, - (OCF₂CF₂CF₂CF(CF₃))-, or the like. -(OC₄F₈)- may be any of - (OCF₂CF₂CF₂CF₂)-, - (OCF (CF₃)CF₂CF₂)-, - (OCF₂CF(CF₃)CF₂)-, - (OCF₂CF₂CF(CF₃))-, -(OC(CF₃)₂CF₂)-, -(OCF₂C(CF₃)₂)-, - (OCF (CF₃)CF(CF₃))-, - (OCF(C₂F₅)CF₂)-, and - (OCF₂CF(C₂F₅))-. - (OC₃F₆)- (that is, in the formula, R^{Fa} is a fluorine atom) may be any of -(OCF₂CF₂CF₂)-, - (OCF (CF₃)CF₂)-, and - (OCF₂CF(CF₃)) -. - (OC₂F₄)- may be any of -(OCF₂CF₂)- and - (OCF (CF₃)) -.

In one embodiment, the repeating unit is linear. When the repeating unit is linear, the surface lubricity and friction durability of the surface-treating layer can be improved.

In one embodiment, the repeating unit is branched. When the repeating unit is branched, the dynamic friction coefficient of the surface-treating layer can be increased.

In one embodiment, R^{F} is each independently at each occurrence a group of any of the following formulas (f1) to (f5) :

-(OC₃F₆)_{d}- (f1)

wherein d is an integer of 1 to 200;

- (OC₄F₈)_{c}-(OC₃F₆)_{d}-(OC₂F₄)ₑ-(OCF₂)_{f}- (f2)

wherein c and d are each independently an integer of 0 or more and 30 or less, e and f are each independently an integer of 1 or more and 200 or less;
the sum of c, d, e, and f is 2 or more; and
the occurrence order of the respective repeating units enclosed in parentheses provided with a subscript c, d, e, or f is not limited in the formula;

   - (R⁶-R⁷)_{g}- (f3)

   wherein R⁶ is OCF₂ or OC₂F₄;
R⁷ is a group selected from OC₂F₄, OC₃F₆, OC₄F₈, OC₅F₁₀, and OC₆F₁₂, or a combination of two or three groups independently selected from these groups; and g is an integer of 2 to 100;

-(OC₆F₁₂)ₐ-(OC₅F₁₀)_{b}-(OC₄F₈)_{c}-(OC₃F₆)_{d}-(OC₂F₄)ₑ-(OCF₂)_{f}- (f4)

wherein e is an integer of 1 or more and 200 or less, a, b, c, d, and f are each independently an integer of 0 or more and 200 or less, the sum of a, b, c, d, e, and f is at least 1, and the occurrence order of the respective repeating units enclosed in parentheses provided with a, b, c, d, e, or f is not limited in the formula; and

-(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)

wherein f is an integer of 1 or more and 200 or less, a, b, c, d, and e are each independently an integer of 0 or more and 200 or less, the sum of a, b, c, d, e, and f is at least 1, and the occurrence order of the respective repeating units enclosed in parentheses provided with a, b, c, d, e, or f is not limited in the formula.

In the formula (f1), d is preferably an integer of 5 to 200, more preferably 10 to 100, still more preferably 15 to 50, for example 25 to 35. The formula (f1) is preferably a group of -(OCF₂CF₂CF₂)_{d}- or - (OCF (CF₃)CF₂)_{d}-, and more preferably a group of -(OCF₂CF₂CF₂)_{d}-.

In the formula (f2), e and f are each independently an integer of preferably 5 or more and 200 or less, and more preferably 10 to 200. The sum of c, d, e, and f is preferably 5 or more, and more preferably 10 or more, and may be, for example, 15 or more or 20 or more. In one embodiment, the formula (f2) is preferably a group of -(OCF₂CF₂CF₂CF₂)_{c}-(OCF₂CF₂CF₂)_{d}-(OCF₂CF₂)ₑ-(OCF₂)_{f}-. In another embodiment, the formula (f2) may be a group of -(OC₂F₄)ₑ-(OCF₂)_{f}-.

In the formula (f3), R⁶ is preferably OC₂F₄. In the formula (f3), R⁷ is preferably a group selected from OC₂F₄, OC₃F₆, and OC₄F₈, or a combination of two or three groups independently selected from these groups, and more preferably a group selected from OC₃F₆ and OC₄F₈. Examples of the combination of two or three groups independently selected from OC₂F₄, OC₃F₆, and OC₄F₈ include, but are not limited to, -OC₂F₄OC₃F₆-, -OC₂F₄OC₄F₈-, -OC₃F₆OC₂F₄-, - OC₃F₆OC₃F₆-, -OC₃F₆OC₄F₈-, -OC₄F₈OC₄F₈-, -OC₄F₈OC₃F₆-, - OC₄F₈OC₂F₄-, -OC₂F₄OC₂F₄OC₃F₆-, -OC₂F₄OC₂F₄OC₄F₆-, - OC₂F₄OC₃F₆OC₂F₄-, -OC₂F₄OC₃F₆OC₃F₆-, -OC₂F₄OC₄F₈OC₂F₄-, - OC₃F₆OC₂F₄OC₂F₄-, -OC₃F₆OC₂F₄OC₃F₆-, -OC₃F₆OC₃F₆OC₂F₄-, and - OC₄F₈OC₂F₄OC₂F₄-. In the formula (f3), g is an integer of preferably 3 or more, and more preferably 5 or more. g is preferably an integer of 50 or less. In the formula (f3), OC₂F₄, OC₃F₆, OC₄F₈, OC₅F₁₀, and OC₆F₁₂ may be either linear or branched, and are preferably linear. In this embodiment, the formula (f3) is preferably - (OC₂F₄-OC₃F₆)_{g}- or -(OC₂F₄-OC₄F₈)_{g}-.

In the formula (f4), e is an integer of preferably 1 or more and 100 or less, and more preferably 5 or more and 100 or less. The sum of a, b, c, d, e, and f is preferably 5 or more, and more preferably 10 or more, and it is, for example, 10 or more and 100 or less.

In the formula (f5), f is an integer of preferably 1 or more and 100 or less, and more preferably 5 or more and 100 or less. The sum of a, b, c, d, e, and f is preferably 5 or more, and more preferably 10 or more, and it is, for example, 10 or more and 100 or less.

In one embodiment, R^{F} is a group of the formula (f1).

In one embodiment, R^{F} is a group of the formula (f2).

In one embodiment, R^{F} is a group of the formula (f3).

In one embodiment, R^{F} is a group of the formula (f4).

In one embodiment, R^{F} is a group of the formula (f5).

In a preferable embodiment, in the formula (1A) and the formula (2A), R^{F} in Rf^{1A} and Rf^{2A} is a group of the formula (f2) .

In R^{F}, the ratio of e to f (hereinafter, referred to as an "e/f ratio") is 0.1 to 10, preferably 0.2 to 5, more preferably 0.2 to 2, still more preferably 0.2 to 1.5, and further preferably 0.2 to 0.85. With an e/f ratio of 10 or less, the lubricity, friction durability, and chemical resistance (such as durability against artificial sweat) of a surface-treating layer obtained from the compound are further increased. The smaller the e/f ratio is, the higher the lubricity and the friction durability of the surface-treating layer are. On the other hand, with an e/f ratio of 0.1 or more, the stability of the compound can be further increased. The larger the e/f ratio is, the more improved the stability of the compound is.

In one embodiment, the e/f ratio is preferably 0.2 to 0.95, and more preferably 0.2 to 0.9.

In one embodiment, from the viewpoint of heat resistance, the e/f ratio is preferably 1.0 or more, and more preferably 1.0 to 2.0.

In the fluoropolyether group-containing compound, the number average molecular weight of the Rf^{1A} and Rf^{2A} moieties is not limited, and is, for example, 500 to 30,000, preferably 1,500 to 30,000, more preferably 2,000 to 10,000. Herein, the number average molecular weight of Rf^{1A} and Rf^{2A} is defined as a value obtained by ¹⁹F-NMR measurement.

In another embodiment, the number average molecular weight of the R^{F} moiety may be 500 to 30,000, preferably 1,000 to 20,000, more preferably 2,000 to 15,000, and still more preferably 2,000 to 10,000, such as 3,000 to 6,000.

In another embodiment, the number average molecular weight of R^{F} moiety may be 4,000 to 30,000, preferably 5,000 to 10,000, and more preferably 6,000 to 10,000.

In the formula, R^{A} is each independently at each occurrence a group of the following formula (S1):

- CR^{d1}ₖ₂R^{e1}₁₂R^{f1}ₘ₂ (S1)

wherein
R^{d1} is each independently at each occurrence -Z²-CR³¹ₚ₂R³²_{q2}R³³ᵣ₂;
Z² is each independently at each occurrence a single bond, an oxygen atom, or a divalent organic group;
R³¹ is each independently at each occurrence -Z^{2'}-CR^{32'}_{q2'}R^{33'}_{r2'};
R³² is each independently at each occurrence -Z³-SiR³⁴ₙ₂R³⁵₃₋ₙ₂;
R³³ is each independently at each occurrence a hydrogen atom, a hydroxyl group, or a monovalent organic group;
p2 is each independently at each occurrence an integer of 0 to 3;
q2 is each independently at each occurrence an integer of 0 to 3;
r2 is each independently at each occurrence an integer of 0 to 3;
Z^{2'} is each independently at each occurrence a single bond, an oxygen atom, or a divalent organic group;
R^{32'} is each independently at each occurrence -Z³-SiR³⁴ₙ₂R³⁵₃₋ₙ₂;
R^{33'} is each independently at each occurrence a hydrogen atom, a hydroxyl group, or a monovalent organic group;
q2' is each independently at each occurrence an integer of 0 to 3;
r2' is each independently at each occurrence an integer of 0 to 3;
Z³ is each independently at each occurrence a single bond, an oxygen atom, or a divalent organic group;
R³⁴ is each independently at each occurrence a hydroxyl group or a hydrolyzable group;
R³⁵ is each independently at each occurrence a hydrogen atom or a monovalent organic group;
n2 is each independently at each occurrence an integer of 0 to 3;
R^{e1} is each independently at each occurrence -Z³-SiR³⁴ₙ₂R³⁵₃₋ₙ₂;
R^{f1} is each independently at each occurrence a hydrogen atom, a hydroxyl group, or a monovalent organic group;
k2 is each independently at each occurrence an integer of 0 to 3;
12 is each independently at each occurrence an integer of 0 to 3; and
m2 is each independently at each occurrence an integer of 0 to 3.

R^{A} is a monovalent group containing a Si atom to which a hydroxyl group or a hydrolyzable group is bonded.

Here, the term "hydrolyzable group" refers to a group which can undergo a hydrolysis reaction, namely, means a group which can be removed from a main backbone of the compound by a hydrolysis reaction. Examples of the hydrolyzable group include -OR^{h}, -OCOR^{h}, -O-N=CR^{h}₂, -NR^{h}₂, - NHR^{h}, and halogen (in these formulae, R^{h} represents a substituted or unsubstituted C₁₋₄ alkyl group).

R^{d1} is each independently at each occurrence -Z²-CR³¹ₚ₂R³²_{q2}R³³ᵣ₂.

Z² is each independently at each occurrence a single bond, an oxygen atom, or a divalent organic group. The right side of the structure described below as Z² is bonded to (CR³¹ₚ₂R³²_{q2}R³³ᵣ₂).

In a preferable embodiment, Z² is a divalent organic group.

Z² is preferably a C₁₋₆ alkylene group, - (CH₂)_{z5}-O-(CH₂)_{z6}-wherein z5 is an integer of 0 to 6 such as an integer of 1 to 6, and z6 is an integer of 0 to 6 such as an integer of 1 to 6, or - (CH₂)_{z7}-phenylene-(CH₂)_{z8}- wherein z7 is an integer of 0 to 6 such as an integer of 1 to 6, and z8 is an integer of 0 to 6 such as an integer of 1 to 6. Such a C₁₋₆ alkylene group may be linear or branched, and is preferably linear. These groups may be substituted with, for example, one or more substituents selected from a fluorine atom, a C₁₋₆ alkyl group, a C₂₋₆ alkenyl group, and a C₂₋₆ alkynyl group, but are preferably unsubstituted.

In a preferable embodiment, Z² is a C₁₋₆ alkylene group or - (CH₂)_{z7}-phenylene-(CH₂)_{z8}-, and preferably -phenylene-(CH₂)_{z8}-. When Z² is such a group, light resistance, in particular ultraviolet resistance, can be further enhanced.

In another preferable embodiment, Z² is a C₁₋₃ alkylene group. In one embodiment, Z² may be -CH₂CH₂CH₂-. In another embodiment, Z² may be -CH₂CH₂-.

R³¹ is each independently at each occurrence -Z^{2'}-CR^{32'}_{q2'}R^{33'}_{r2'}.

Z^{2'} is each independently at each occurrence a single bond, an oxygen atom, or a divalent organic group. The right side of the structure described below as Z^{2'} is bonded to (CR^{32'}_{q2'}R^{33'}_{r2'}).

Z^{2'} is preferably a C₁₋₆ alkylene group, -(CH₂)_{z5'}-O-(CH₂)_{z6'}- wherein z5' is an integer of 0 to 6 such as an integer of 1 to 6, and z6' is an integer of 0 to 6 such as an integer of 1 to 6, or - (CH₂)_{z7'}-phenylene-(CH₂)_{z8'}- wherein z7' is an integer of 0 to 6 such as an integer of 1 to 6, and z8' is an integer of 0 to 6 such as an integer of 1 to 6. Such a C₁₋₆ alkylene group may be linear or branched, and is preferably linear. These groups may be substituted with, for example, one or more substituents selected from a fluorine atom, a C₁₋₆ alkyl group, a C₂₋₆ alkenyl group, and a C₂₋₆ alkynyl group, but are preferably unsubstituted.

In a preferred embodiment, Z^{2'} is a C₁₋₆ alkylene group or - (CH₂)_{z7'}-phenylene-(CH₂)_{z8'}-, and preferably -phenylene-(CH₂)_{z8'}-. When Z^{2'} is such a group, light resistance, in particular ultraviolet resistance, can be further enhanced.

In another preferable embodiment, Z^{2'} is a C₁₋₃ alkylene group. In one embodiment, Z^{2'} may be -CH₂CH₂CH₂-. In another embodiment, Z^{2'} may be -CH₂CH₂-.

R^{32'} is each independently at each occurrence -Z³-SiR³⁴ₙ₂R³⁵₃₋ₙ₂.

Z³ is each independently at each occurrence a single bond, an oxygen atom, or a divalent organic group. The right side of the structure described below as Z³ is bonded to (SiR³⁴ₙ₂R³⁵₃₋ₙ₂).

In one embodiment, Z³ is an oxygen atom.

In one embodiment, Z³ is a divalent organic group.

Z³ is preferably a C₁₋₆ alkylene group, - (CH₂)_{z5"}-O-(CH₂)_{z6"}- wherein z5" is an integer of 0 to 6 such as an integer of 1 to 6, and z6" is an integer of 0 to 6 such as an integer of 1 to 6, or - (CH₂)_{z7"}-phenylene-(CH₂)_{z8"}- wherein z7" is an integer of 0 to 6 such as an integer of 1 to 6, and z8" is an integer of 0 to 6 such as an integer of 1 to 6. Such a C₁₋₆ alkylene group may be linear or branched, and is preferably linear. These groups may be substituted with, for example, one or more substituents selected from a fluorine atom, a C₁₋₆ alkyl group, a C₂₋₆ alkenyl group, and a C₂₋₆ alkynyl group, but are preferably unsubstituted.

In a preferable embodiment, Z³ is a C₁₋₆ alkylene group or - (CH₂)_{z7"}-phenylene-(CH₂)_{z8"}-, and preferably -phenylene-(CH₂)_{z8"}-. When Z³ is such a group, light resistance, in particular ultraviolet resistance, can be further enhanced.

In another preferable embodiment, Z³ is a C₁₋₃ alkylene group. In one embodiment, Z³ may be -CH₂CH₂CH₂-. In another embodiment, Z³ may be -CH₂CH₂-.

R³⁴ is each independently at each occurrence a hydroxyl group or a hydrolyzable group.

Preferably, R³⁴ is each independently at each occurrence a hydrolyzable group.

R³⁴ is, each independently at each occurrence, preferably -OR^{h}, -OCOR^{h}, -O-N=CR^{h}₂, -NR^{h}₂, - NHR^{h}, or halogen (wherein R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R³⁵ is each independently at each occurrence a hydrogen atom or a monovalent organic group. Such a monovalent organic group is a monovalent organic group excluding the hydrolyzable group.

In R³⁵, the monovalent organic group is preferably a C₁₋₂₀ alkyl group, more preferably a C₁₋₆ alkyl group, and still more preferably a methyl group.

In the formula, n2 is each independently an integer of 0 to 3 in each (SiR³⁴ₙ₂R³⁵₃₋ₙ₂)unit. However, at least one (SiR³⁴ₙ₂R³⁵₃₋ₙ₂)unit with n2 of 1 to 3 is present in the terminal moieties of the formula (1A) and the formula (2A). That is, in such terminal moieties, not all n2 can be zero at the same time. In other words, in the terminal moieties of the formula (1A) and the formula (2A), at least one Si atom to which a hydroxyl group or a hydrolyzable group is bonded is present.

n2 is, each independently, an integer of preferably 1 to 3, more preferably 2 to 3, and still more preferably 3 in each (SiR³⁴ₙ₂R³⁵₃₋ₙ₂) unit.

R^{33'} is each independently at each occurrence a hydrogen atom, a hydroxyl group, or a monovalent organic group. Such a monovalent organic group is a monovalent organic group excluding the hydrolyzable group.

In R^{33'}, the monovalent organic group is preferably a C₁₋₂₀ alkyl group or - (CₛH₂ₛ)ₜ₁-(O-CₛH₂ₛ)ₜ₂ wherein s is an integer of 1 to 6, preferably an integer of 2 to 4, t1 is 1 or 0, preferably 0, and t2 is an integer of 1 to 20, preferably an integer of 2 to 10, more preferably an integer of 2 to 6, more preferably a C₁₋₂₀ alkyl group, still more preferably a C₁₋₆ alkyl group, particularly preferably a methyl group.

In one embodiment, R^{33'} is a hydroxyl group.

In another embodiment, the monovalent organic group for R^{33'} is preferably a C₁₋₂₀ alkyl group, and more preferably a C₁₋₆ alkyl group.

q2' is each independently at each occurrence an integer of 0 to 3, and r2' is each independently at each occurrence an integer of 0 to 3. The total of q2' and r2' is 3 in the (CR^{32'}_{q2'}R^{33'}_{r2'}) unit.

q2' is, each independently, an integer of preferably 1 to 3, more preferably 2 to 3, and still more preferably 3 in each (CR^{32'}_{q2'}R^{33'}_{r2'}) unit.

R³² is each independently at each occurrence -Z³-SiR³⁴ₙ₂R³⁵₃₋ₙ₂. Such -Z³-SiR³⁴ₙ₂R³⁵₃₋ₙ₂ has the same definition as described in R^{32'}.

R³³ is each independently at each occurrence a hydrogen atom, a hydroxyl group, or a monovalent organic group. Such a monovalent organic group is a monovalent organic group excluding the hydrolyzable group.

In R³³, the monovalent organic group is preferably a C₁₋₂₀ alkyl group or - (CₛH₂ₛ)ₜ₁-(O-CₛH₂ₛ)ₜ₂ wherein s is an integer of 1 to 6, preferably an integer of 2 to 4, t1 is 1 or 0, preferably 0, and t2 is an integer of 1 to 20, preferably an integer of 2 to 10, more preferably an integer of 2 to 6, more preferably a C₁₋₂₀ alkyl group, still more preferably a C₁₋₆ alkyl group, particularly preferably a methyl group.

In one embodiment, R³³ is a hydroxyl group.

In another embodiment, the monovalent organic group for R³³ is preferably a C₁₋₂₀ alkyl group, and more preferably a C₁₋₆ alkyl group.

p2 is each independently at each occurrence an integer of 0 to 3, q2 is each independently at each occurrence an integer of 0 to 3, and r2 is each independently at each occurrence an integer of 0 to 3. The total of p2, q2, and r2 is 3 in the (CR³¹ₚ₂R³²_{q2}R³³ᵣ₂) unit.

In one embodiment, p2 is 0.

In one embodiment, p2 may be each independently an integer of 1 to 3, an integer of 2 to 3, or 3 in each (CR³¹ₚ₂R³²_{q2}R³³ᵣ₂) unit. In a preferable embodiment, p2' is 3.

In one embodiment, q2 is each independently an integer of 1 to 3, preferably an integer of 2 to 3, and more preferably 3 in each (CR³¹ₚ₂R³²_{q2}R³³ᵣ₂) unit.

In one embodiment, p2 is 0, and q2 is each independently an integer of 1 to 3, preferably an integer of 2 to 3, and still more preferably 3 in each (CR³¹ₚ₂R³²_{q2}R³³ᵣ₂) unit.

R^{e1} is each independently at each occurrence -Z³-SiR³⁴ₙ₂R³⁵₃₋ₙ₂. Such -Z³-SiR³⁴ₙ₂R³⁵₃₋ₙ₂ has the same definition as described in R^{32'}.

R^{f1} is each independently at each occurrence a hydrogen atom, a hydroxyl group, or a monovalent organic group. Such a monovalent organic group is a monovalent organic group excluding the hydrolyzable group.

In R^{f1}, the monovalent organic group is preferably a C₁₋₂₀ alkyl group or - (CₛH₂ₛ)ₜ₁-(O-CₛH₂ₛ)ₜ₂ wherein s is an integer of 1 to 6, preferably an integer of 2 to 4, t1 is 1 or 0, preferably 0, and t2 is an integer of 1 to 20, preferably an integer of 2 to 10, more preferably an integer of 2 to 6, more preferably a C₁₋₂₀ alkyl group, still more preferably a C₁₋₆ alkyl group, particularly preferably a methyl group.

In one embodiment, R^{f1} is a hydroxyl group.

In another embodiment, the monovalent organic group for R^{f1} is preferably a C₁₋₂₀ alkyl group, and more preferably a C₁₋₆ alkyl group.

k2 is each independently at each occurrence an integer of 0 to 3, 12 is each independently at each occurrence an integer of 0 to 3, and m2 is each independently at each occurrence an integer of 0 to 3. The total of k2, 12, and m2 is 3 in the (CR^{d1}ₖ₂R^{e1}₁₂R^{f1}ₘ₂) unit.

In one embodiment, when R^{A} is a group of the formula (S4), two or more, for example, 2 to 27, preferably 2 to 9, more preferably 2 to 6, still more preferably 2 to 3, particularly preferably 3 (SiR³⁴ₙ₂R³⁵₃₋ₙ₂) units in which n2 is 1 to 3, preferably 2 or 3, more preferably 3 are present in each terminal moiety of the formula (1) and the formula (2).

In a preferable embodiment, when R^{32'} is present, in at least one, preferably all R^{32'}, n2 is an integer of 1 to 3, preferably 2 or 3, and more preferably 3.

In a preferable embodiment, when R³² is present, in at least one, preferably all R³², n2 is an integer of 1 to 3, preferably 2 or 3, and more preferably 3.

In a preferred embodiment, when R^{e1} is present, in at least one, preferably all R^{e1}, n2 is an integer of 1 to 3, preferably 2 or 3, and more preferably 3.

In a preferable embodiment, k2 is 0, 12 is 2 and m2 is 1, or k2 is 0, 12 is 3, and m2 is 0. Preferably, k2 is 0, 12 is 3, and m2 is 0.

In a preferable embodiment, k2 is 0, 12 is 2 or 3 and preferably 3, and n2 is 2 or 3 and preferably 3.

In the formulas (1A) and (2A), X^{A} is interpreted as a linker, connecting a fluoropolyether moiety (Rf^{1A} and Rf^{2A}) which mainly provides, e.g., water-repellency and surface lubricity, and a moiety (R^{A}) providing binding ability to a substrate. Accordingly, X^{A} may be a single bond or any group as long as the compounds of the formulas (1A) and (2A) can stably exist.

In the formula (1A), α1 is an integer of 1 to 9, and β1 is an integer of 1 to 9. The integers represented by α1 and β1 may vary depending on the valence of X^{A}. The sum of α1 and β1 is the same as the valence of X^{A}. For example, when X^{A} is a decavalent organic group, the sum of α1 and β1 is 10; for example, a case where α1 is 9 and β1 is 1, and α1 is 5 and β1 is 5, or α1 is 1 and β1 is 9, can be considered. When X^{A} is a divalent organic group, α and β each are 1.

In the formula (2A), γ1 is an integer of 1 to 9. γ1 may vary depending on the valence of X^{A}. That is, γ1 is a value obtained by subtracting 1 from the valence of X^{A}.

X^{A} is each independently a single bond or a di- to decavalent organic group.

The di- to decavalent organic group in X^{A} is preferably a di- to octavalent organic group. In one embodiment, such a di- to decavalent organic group is preferably a di- to tetravalent organic group, and more preferably a divalent organic group. In another embodiment, the di- to decavalent organic group is preferably a tri- to octavalent organic group, and more preferably a tri- to hexavalent organic group.

In one embodiment, X^{A} is a single bond or a divalent organic group, α1 is 1, and β1 is 1.

In one embodiment, X^{A} is a single bond or a divalent organic group, and γ1 is 1.

In one embodiment, X^{A} is a tri- to hexavalent organic group, α1 is 1, and β1 is 2 to 5.

In one embodiment, X^{A} is a tri- to hexavalent organic group, and γ1 is 2 to 5.

In one embodiment, X^{A} is a trivalent organic group, α1 is 1, and β1 is 2.

In one embodiment, X^{A} is a trivalent organic group, and γ is 2.

When X^{A} is a single bond or a divalent organic group, the formulas (1A) and (2A) are of the following formulas (1A') and (2A').

**RF^{1A}**-**X^{A}**-**R^{A}** **(1A')**

**R^{A}**-**X^{A}**-**Rf^{2A}**-**X^{A}**-**R^{A}** **(2A')**

In one embodiment, X^{A} is a single bond.

In another embodiment, X^{A} is a divalent organic group.

In one embodiment, examples of X^{A} include a single bond or a divalent organic group of the following formula:

- (R⁵¹)ₚ₅-(X⁵¹)_{q5}-

wherein
R⁵¹ represents a single bond, -(CH₂)ₛ₅-, or an o-, m-, or p-phenylene group, and is preferably -(CH₂)ₛ₅-;
s5 is an integer of 1 to 20, preferably 1 to 6, more preferably 1 to 3, and further preferably 1 or 2;
X⁵¹ represents - (X⁵²)₁₅-;
X⁵² each independently at each occurrence represents a group selected from the group consisting of -O-, -S-, an o-, m-, or p-phenylene group, -C(O)O-, -Si(R⁵³)₂-, - (Si(R⁵³)₂O)ₘ₅-Si (R⁵³)₂-, -CONR⁵⁴-, -O-CONR⁵⁴-, -NR⁵⁴-, and -(CH₂)ₙ₅-;
R⁵³ each independently at each occurrence represents a phenyl group, a C₁₋₆ alkyl group, or a C₁₋₆ alkoxy group, and is preferably a phenyl group or a C₁₋₆ alkyl group, and more preferably a methyl group;
R⁵⁴ each independently at each occurrence represents a hydrogen atom, a phenyl group, or a C₁₋₆ alkyl group (preferably a methyl group);
m5 is each independently at each occurrence an integer of 1 to 100 and preferably an integer of 1 to 20;
n5 is each independently at each occurrence an integer of 1 to 20, preferably an integer of 1 to 6, and more preferably an integer of 1 to 3;
15 is an integer of 1 to 10, preferably an integer of 1 to 5, and more preferably an integer of 1 to 3;
p5 is 0 or 1; and
q5 is 0 or 1,
provided that at least one of p5 and q5 is 1, and the occurrence order of the respective repeating units enclosed in parentheses provided with p5 or q5 is not limited.

Here, X^{A} (typically, hydrogen atoms of X^{A}) is optionally substituted with one or more substituents selected from a fluorine atom, a C₁₋₃ alkyl group, and a C₁₋₃ fluoroalkyl group. In a preferable embodiment, X^{A} is not substituted with these groups.

In a preferable embodiment, X^{A} is each independently - (R⁵¹)ₚ₅-(X⁵¹)_{q5}-R⁵²-. R⁵² represents a single bond, -(CH₂)ₜ₅-, an o-, m-, or a p-phenylene group, and is preferably -(CH₂)ₜ₅-. t5 is an integer of 1 to 20, preferably an integer of 2 to 6, and more preferably an integer of 2 to 3. Here, R⁵² (typically, hydrogen atoms of R⁵²) is optionally substituted with one or more substituents selected from a fluorine atom, a C₁₋₃ alkyl group, and a C₁₋₃ fluoroalkyl group. In a preferable embodiment, R⁵⁶ is not substituted with these groups.

Preferably, X^{A} may each independently be
a single bond,
a C₁₋₂₀ alkylene group,

   -R⁵¹-X⁵³-R⁵²-

   , or
-X⁵⁴-R⁵-

   ,
   wherein R⁵¹ and R⁵² have the same definition as above; and
      X⁵³ represents

      -O-,

      -S-,

      -C(O)O-,

      -CONR⁵⁴-,

      -O-CONR⁵⁴-,

      -Si(R⁵³)₂-,

      - (Si(R⁵³)₂O)ₘ₅-Si(R⁵³)₂-,

      -O-(CH₂)ᵤ₅-(Si(R⁵³)₂O)ₘ₅-Si(R⁵³)₂-,

      -O-(CH₂)ᵤ₅-Si(R⁵³)₂-O-Si(R⁵³)₂-CH₂CH₂-Si(R⁵³)₂-O-Si(R⁵³)₂-,

      -O-(CH₂)ᵤ₅-Si(OCH₃)₂OSi(OCH₃)₂-,

      -CONR⁵⁴-(CH₂)₅-(Si(R⁵³)₂O)ₘ₅-Si(R⁵³)₂-,

      -CONR⁵⁴-(CH₂)ᵤ₅-N(R⁵⁴)-, or

      -CONR⁵⁴-(o-, m- or p-phenylene) -Si (R⁵³)₂-,
   wherein R⁵³, R⁵⁴, and m5 have the same definition as above, and
      u5 is an integer of 1 to 20, preferably an integer of 2 to 6, and more preferably an integer of 2 to 3; and
      X⁵⁴ represents

         -S-,

         -C(O)O-,

         -CONR⁵⁴-,

         -O-CONR⁵⁴-,

         -CONR⁵⁴-(CH₂)ᵤ₅-(Si (R⁵⁴)₂O)ₘ₅-Si(R⁵⁴)₂-,

         -CONR⁵⁴-(CH₂)ᵤ₅-N(R⁵⁴)-, or

         -CONR⁵⁴-(o-, m- or p-phenylene) -Si (R⁵⁴)₂-,
      wherein each symbol has the same definition as above.

More preferably, X^{A} may each independently be
a single bond,
a C₁₋₂₀ alkylene group,

   -(CH₂)ₛ₅-X⁵³-,

   -(CH₂)ₛ₅-X⁵³-(CH₂)ₜ₅-,

   -X⁵⁴-, or

   -X⁵⁴-(CH₂)ₜ₅-,
wherein X⁵³, X⁵⁴, s5, and t5 have the same definition as above.

More preferably, X^{A} may each independently be
a single bond,
a C₁₋₂₀ alkylene group,

   - (CH₂)ₛ₅-X⁵³-(CH₂)ₜ₅-, or

   -X⁵⁴-(CH₂)ₜ₅-,
wherein each symbol has the same definition as above.

In a preferable embodiment, X^{A} may each independently be
a single bond,
a C₁₋₂₀ alkylene group,

   -(CH₂)ₛ₅-X⁵³-, or

   -(CH₂)ₛ₅-X⁵³-(CH₂)ₜ₅-,
wherein
   X⁵³ is -O-, -CONR⁵⁴-, or -O-CONR⁵⁴-;
   R⁵⁴ each independently at each occurrence represents a hydrogen atom, a phenyl group, or a C₁₋₆ alkyl group;
   s5 is an integer of 1 to 20; and
   t5 is an integer of 1 to 20.

In a preferable embodiment, X^{A} may each independently be

-(CH₂)ₛ₅-O-(CH₂)ₜ₅-, or

-CONR⁵⁴-(CH₂)ₜ₅-,

wherein
R⁵⁴ each independently at each occurrence represents a hydrogen atom, a phenyl group, or a C₁₋₆ alkyl group;
s5 is an integer of 1 to 20; and
t5 is an integer of 1 to 20.

In one embodiment, X^{A} may each independently be a single bond,
a C₁₋₂₀ alkylene group,

   -(CH₂)ₛ₅-O-(CH₂)ₜ₅-,

   - (CH₂)ₛ₅-(Si(R⁵³)₂O)ₘ₅-Si(R⁵³)₂-(CH₂)ₜ₅-,

   - (CH₂)ₛ₅-O-(CH₂)ᵤ₅-(Si(R⁵³)₂O)ₘ₅-Si(R⁵³)₂-(CH₂)ₜ₅-, or

   - (CH₂)ₛ₅-O-(CH₂)ₜ₅-Si(R⁵³)₂-(CH₂)ᵤ₅-Si(R⁵³)₂-(CᵥH₂ᵥ)-,
wherein R⁵³, m5, s5, t5, and u5 have the same definition as above, and v5 is an integer of 1 to 20, preferably an integer of 2 to 6, and more preferably an integer of 2 to 3.

In the formula, -(CᵥH₂ᵥ)- may be linear or branched and may be, for example, -CH₂CH₂-, -CH₂CH₂CH₂-, -CH(CH₃)-, or - CH(CH₃)CH₂-.

X^{A} is each independently optionally substituted with one or more substituents selected from a fluorine atom, a C₁₋₃ alkyl group and a C₁₋₃ fluoroalkyl group (preferably, C₁₋₃ perfluoroalkyl group). In one embodiment, X^{A} is unsubstituted.

The left side of each formula of X^{A} binds to Rf^{1A} or Rf^{2A}, and the right side binds to R^{A}.

In one embodiment, X^{A} may each independently be a group that is different from an -O-C₁₋₆ alkylene group.

In another embodiment, examples of the X^{A} group include the following groups: 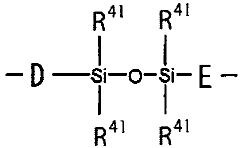 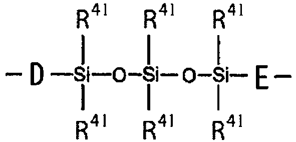 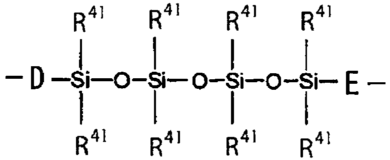 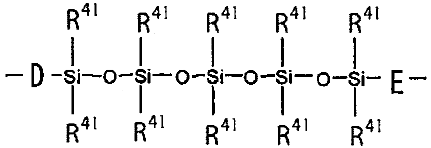 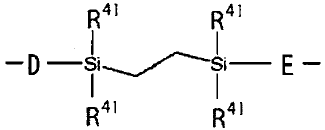 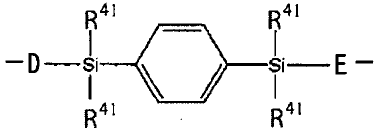 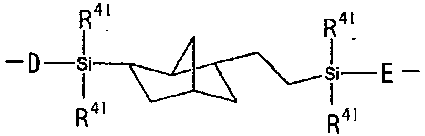 wherein each R⁴¹ is independently a hydrogen atom, a phenyl group, an alkyl group having 1 to 6 carbon atoms, or a C₁₋₆ alkoxy group, preferably a methyl group;
D is a group selected from

   -CH₂O(CH₂)₂-,

   -CH₂O(CH₂)₃-,

   -CF₂O(CH₂)₃-,

   -(CH₂)₂-,

   -(CH₂)₃-,

   -(CH₂)₄-,

   -CONH-(CH₂)₃-,

   -CON(CH₃)-(CH₂)₃-, and

   -CON(Ph)-(CH₂)₃-

   wherein Ph stands for phenyl; and
a group of the following formula: 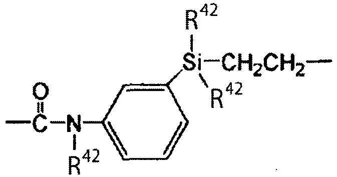
wherein R⁴² each independently represents a hydrogen atom, a C₁₋₆ alkyl group or a C₁₋₆ alkoxy group, preferably a methyl group or a methoxy group, and more preferably a methyl group,
   E is -(CH₂)ₙ- (n is an integer of 2 to 6), and
   D is bonded to Rf^{1A} or Rf^{2A} of the molecular backbone and E is bonded to R^{A}.

Specific examples of X^{A} include:
a single bond,

   -CH₂OCH₂-,

   -CH₂O(CH₂)₂-,

   -CH₂O(CH₂)₃-,

   -CH₂O(CH₂)₄-,

   -CH₂O(CH₂)₅-,

   -CH₂O(CH₂)₆-,

   -CH₂O(CH₂)₃Si(CH₃)₂OSi(CH₃)₂(CH₂)₂-,

   -CH₂O(CH₂)₃Si(CH₃)₂OSi(CH₃)₂OSi(CH₃)₂(CH₂)₂-,

   -CH₂O(CH₂)₃Si(CH₃)₂O(Si(CH₃)₂O)₂Si(CH₃)₂(CH₂)₂-,

   -CH₂O(CH₂)₃Si(CH₃)₂O(Si(CH₃)₂O)₃Si(CH₃)₂(CH₂)₂-,

   -CH₂O(CH₂)₃Si(CH₃)₂O(Si(CH₃)₂O)₁₀Si(CH₃)₂(CH₂)₂-,

   -CH₂O(CH₂)₃Si(CH₃)₂O(Si(CH₃)₂O)₂₀Si(CH₃)₂(CH₂)₂-,

   -CH₂OCF₂CHFOCF₂-,

   -CH₂OCF₂CHFOCF₂CF₂-,

   -CH₂OCF₂CHFOCF₂CF₂CF₂-,

   -CH₂OCH₂CF₂CF₂OCF₂-,

   -CH₂OCH₂CF₂CF₂OCF₂CF₂-,

   -CH₂OCH₂CF₂CF₂OCF₂CF₂CF₂-,

   -CH₂OCH₂CF₂CF₂OCF(CF₃)CF₂OCF₂-,

   -CH₂OCH₂CF₂CF₂OCF(CF₃)CF₂OCF₂CF₂-,

   -CH₂OCH₂CF₂CF₂OCF(CF₃)CF₂OCF₂CF₂CF₂-,

   -CH₂OCH₂CHFCF₂OCF₂-,

   -CH₂OCH₂CHFCF₂OCF₂CF₂-,

   -CH₂OCH₂CHFCF₂OCF₂CF₂CF₂-,

   -CH₂OCH₂CHFCF₂OCF(CF₃)CF₂OCF₂-,

   -CH₂OCH₂CHFCF₂OCF(CF₃)CF₂OCF₂CF₂-,

   -CH₂OCH₂CHFCF₂OCF(CF₃)CF₂OCF₂CF₂CF₂-

   -CH₂OCF₂CHFOCF₂CF₂CF₂-C(O)NH-CH₂-,

   CH₂OCH₂(CH₂)₇CH₂Si(OCH₃)₂OSi(OCH₃)₂(CH₂)₂Si(OCH₃)₂OSi(OCH₃)₂(CH₂ )₂

   -,

   -CH₂OCH₂CH₂CH₂Si(OCH₃)₂OSi(OCH₃)₂(CH₂)₃-,

   -CH₂OCH₂CH₂CH₂Si(OCH₂CH₃)₂OSi(OCH₂CH₃)₂(CH₂)₃-,

   -CH₂OCH₂CH₂CH₂Si(OCH₃)₂OSi(OCH₃)₂(CH₂)₂-,

   -CH₂OCH₂CH₂CH₂Si(OCH₂CH₃)₂OSi(OCH₂CH₃)₂(CH₂)₂-,

   - (CH₂)₂-Si(CH₃)₂-(CH₂)₂-,

   -CH₂-,

   -(CH₂)₂-,

   -(CH₂)3⁻,

   -(CH₂)₄-,

   -(CH₂)₅-,

   -(CH₂)₆-,

   -CO-,

   -CONH-,

   -CONH-CH₂-,

   -CONH-(CH₂)₂-,

   -CONH-(CH₂)₃-,

   -CONH-(CH₂)₄-,

   -CONH-(CH₂)₅-,

   -CONH-(CH₂)₆-,

   -CON(CH₃)-CH₂-,

   -CON(CH₃)-(CH₂)₂-,

   -CON(CH₃)-(CH₂)₃-,

   -CON(CH₃)-(CH₂)₄-,

   -CON(CH₃)-(CH₂)₅-,

   -CON(CH₃)-(CH₂)₆-,

   -CON(Ph)-CH₂- wherein Ph stands for phenyl,

   -CON(Ph)-(CH₂)₂- wherein Ph stands for phenyl,

   -CON(Ph)-(CH₂)₃- wherein Ph stands for phenyl,

   -CON(Ph)-(CH₂)₄- wherein Ph stands for phenyl,

   -CON(Ph)-(CH₂)₅- wherein Ph stands for phenyl,

   -CON(Ph)-(CH₂)₆- wherein Ph stands for phenyl,

   -CONH-(CH₂)₂NH(CH₂)₃-,

   -CONH-(CH₂)₆NH(CH₂)₃-,

   -CH₂O-CONH-(CH₂)₃-,

   -CH₂O-CONH-(CH₂)₆-,

   -S-(CH₂)₃-,

   -(CH₂)₂S(CH₂)₃-,

   -CONH-(CH₂)₃Si(CH₃)₂OSi(CH₃)₂(CH₂)₂-,

   -CONH-(CH₂)₃Si(CH₃)₂OSi(CH₃)₂OSi(CH₃)₂(CH₂)₂-,

   -CONH-(CH₂)₃Si(CH₃)₂O(Si(CH₃)₂O)₂Si(CH₃)₂(CH₂)₂-,

   -CONH-(CH₂)₃Si(CH₃)₂O(Si(CH₃)₂O)₃Si(CH₃)₂(CH₂)₂-,

   -CONH-(CH₂)₃Si(CH₃)₂O(Si(CH₃)₂O)₁₀Si(CH₃)₂(CH₂)₂-,

   -CONH-(CH₂)₃Si(CH₃)₂O(Si(CH₃)₂O)₂OSi(CH₃)₂(CH₂)₂-,

   -C(O)O-(CH₂)₃-,

   -C(O)O-(CH₂)₆-,

   -CH₂-O-(CH₂)₃-Si(CH₃)₂-(CH₂)₂-Si(CH₃)₂-(CH₂)₂-,

   -CH₂-O-(CH₂)₃-Si(CH₃)₂-(CH₂)₂-Si(CH₃)₂-CH(CH₃)-,

   -CH₂-O-(CH₂)₃-Si(CH₃)₂-(CH₂)₂-Si(CH₃)₂-(CH₂)₃-,

   -CH₂-O-(CH₂)₃-Si(CH₃)₂-(CH₂)₂-Si(CH₃)₂-CH(CH₃)-CH₂-,

   -OCH₂-,

   -O(CH₂)₃-,

   -OCFHCF₂-,
and

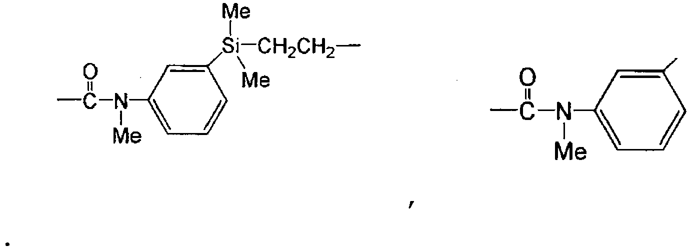

In yet another embodiment, X^{A} is each independently a group of the formula: -(R¹⁶)ₓ₁-(CFR¹⁷)_{y1}-(CH₂)_{z1}-. In the formula, x1, y1, and z1 are each independently an integer of 0 to 10, the sum of x1, y1, and z1 is 1 or more, and the occurrence order of the respective repeating units enclosed in parentheses is not limited in the formulas.

In the formula, R¹⁶ is each independently at each occurrence an oxygen atom, phenylene, carbazolylene, -NR¹⁸-wherein R¹⁸ represents a hydrogen atom or an organic group or a divalent organic group. Preferably, R¹⁸ is an oxygen atom or a divalent polar group.

Examples of the "divalent polar group" include, but are not limited to, -C(O)-, -C(=NR¹⁹)- and -C(O)NR¹⁹- wherein R¹⁹ represents a hydrogen atom or a lower alkyl group. The "lower alkyl group" is, for example, an alkyl group having 1 to 6 carbon atoms, such as methyl, ethyl or n-propyl, and these may be substituted with one or more fluorine atoms.

In the formulas, R¹⁷ is each independently at each occurrence a hydrogen atom, a fluorine atom or a lower fluoroalkyl group, and preferably a fluorine atom. The "lower fluoroalkyl group" is, for example, a fluoroalkyl group having 1 to 6 carbon atoms and preferably 1 to 3 carbon atoms, preferably a perfluoroalkyl group having 1 to 3 carbon atoms, more preferably a trifluoromethyl group or pentafluoroethyl group, and further preferably a trifluoromethyl group.

In still another embodiment, examples of the X^{A} group include the following group: 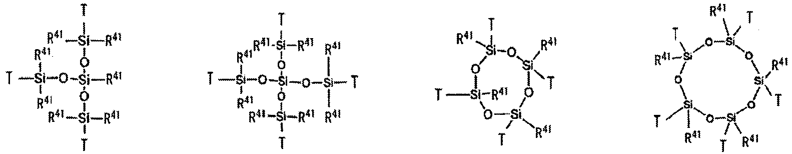 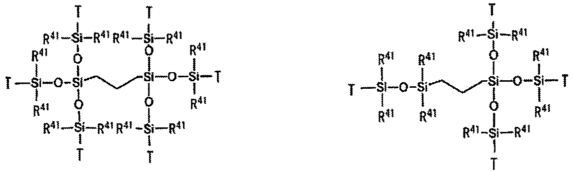 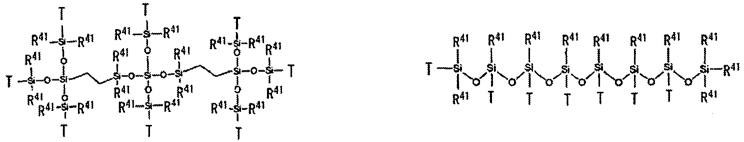 wherein
R⁴¹ each independently represents a hydrogen atom, a phenyl group, an alkyl group having 1 to 6 carbon atoms or a C₁₋₆ alkoxy group, and preferably a methyl group; and
in each X^{A} group, some of the groups represented by T are the following groups bonded to Rf^{1A} or Rf^{2A} of the molecular backbone:

   -CH₂O(CH₂)₂-,

   -CH₂O(CH₂)₃-,

   - (CH₂)₂-,

   -(CH₂)₃-,

   - (CH₂)₄-,

   -CONH-(CH₂)₃-,

   -CON(CH₃)-(CH₂)₃-, and

   -CON(Ph)-(CH₂)₃- wherein Ph stands for phenyl, or a group of:

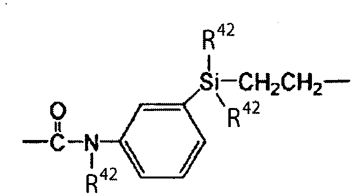

   wherein R⁴² each independently represents a hydrogen atom, a C₁₋₆ alkyl group or a C₁₋₆ alkoxy group, preferably a methyl group or a methoxy group, and more preferably a methyl group, and
   some other of the Ts binds to R^{A} of the molecular backbone, and the remaining of the Ts, if present, is independently a methyl group, a phenyl group, a C₁₋₆ alkoxy group, or a radical scavenging group or an UV absorbing group.

The radical scavenging group is not limited as long as it can scavenge a radical generated by light irradiation, and examples thereof include a residue of benzophenones, benzotriazoles, benzoates, phenyl salicylates, crotonic acids, malonates, organoacrylates, hindered amines, hindered phenols, or triazines.

The UV absorbing group is not limited as long as it can absorb ultraviolet rays, and examples thereof include a residue of a benzotriazole, a hydroxybenzophenone, an ester of a substituted and unsubstituted benzoic acid or salicylic acid compound, an acrylate or an alkoxy cinnamate, an oxamide, an oxanilide, a benzoxazinone or a benzoxazole.

In a preferable embodiment, examples of a preferable radical scavenging group or UV absorbing group include

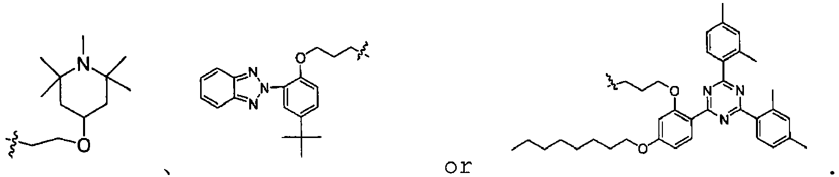

In this embodiment, X^{A} may each independently be a tri-to decavalent organic group.

In still another embodiment, examples of the X^{A} group include the following group: 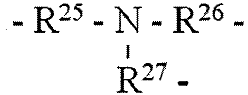 wherein R²⁵, R²⁶, and R²⁷ are each independently a di- to hexavalent organic group; and
R²⁵ binds to at least one R^{F1}, and R²⁶ and R²⁷ each bind to at least one R^{Si}.

In one embodiment, R²⁵ is a single bond, a C₁₋₂₀ alkylene group, a C₃₋₂₀ cycloalkylene group, a C₅₋₂₀ arylene group, - R⁵⁷-X⁵⁸-R⁵⁹-, -X⁵⁸-R⁵⁹-, or -R⁵⁷-X⁵⁸-. R⁵⁷ and R⁵⁹ are each independently a single bond, a C₁₋₂₀ alkylene group, a C₃₋₂₀ cycloalkylene group, or a C₅₋₂₀ arylene group. X⁵⁸ is -O-, - S-, -CO-, -O-CO-, or -COO-.

In one embodiment, R²⁶ and R²⁷ are each independently a hydrocarbon or a group having at least one atom selected from N, O and S at the end or in the backbone of a hydrocarbon, preferably including a C₁₋₆ alkyl group, -R³⁶-R³⁷-R³⁶-, -R³⁶-CHR³⁸₂-, and the like. Here, R³⁶ is each independently a single bond or an alkyl group having 1 to 6 carbon atoms, preferably an alkyl group having 1 to 6 carbon atoms. R³⁷ is N, O or S, preferably N or O. R³⁸ is -R⁴⁵-R⁴⁶-R⁴⁵-, -R⁴⁶-R⁴⁵-, or -R⁴⁵-R⁴⁶-. Here, R⁴⁵ is each independently an alkyl group having 1 to 6 carbon atoms. R⁴⁶ is N, O, or S, preferably O.

In this embodiment, X^{A} may each independently be a tri-to decavalent organic group.

The fluoropolyether group-containing compound of the formula (1) or the formula (2) is not limited, but may have an average molecular weight of 5 × 10² to 1 × 10⁵. In particular, the compound preferably has an average molecular weight of 2,000 to 32,000, and more preferably 2,500 to 12,000, from the viewpoint of friction durability. The "average molecular weight" refers to a number average molecular weight, and the "average molecular weight" is a value obtained by ¹⁹F-NMR measurement.

In one embodiment, the fluoropolyether group-containing compound of the component (A) in the surface-treating agent of the present disclosure is a compound of the formula (1A).

In another embodiment, the fluoropolyether group-containing compound of the component (A) in the surface-treating agent of the present disclosure is a compound of the formula (2).

In another embodiment, the fluoropolyether group-containing compound in the surface-treating agent of the present disclosure is the compound of the formula (1A) and the compound of the formula (2A).

In the surface-treating agent of the present disclosure, the compound of the formula (2A) is preferably 0.1 mol% or more and 35 mol% or less based on the total of the compound of the formula (1A) and the compound of the formula (2A). The lower limit of the content of the compound of the formula (2A) based on the total of the compound of the formula (1A) and the compound of the formula (2A) may be preferably 0.1 mol%, more preferably 0.2 mol%, still more preferably 0.5 mol%, and further preferably 1 mol%, particularly preferably 2 mol%, and especially 5 mol%. The upper limit of the content of the compound of the formula (2A) based on the total of the compound of the formula (1A) and the compound of the formula (2A) may be preferably 35 mol%, more preferably 30 mol%, still more preferably 20 mol%, and further preferably 15 mol% or 10 mol%. The compound of the formula (2A) based on the total of the compound of the formula (1A) and the compound of the formula (2A) is preferably 0.1 mol% or more and 30 mol% or less, more preferably 0.1 mol% or more and 20 mol% or less, still more preferably 0.2 mol% or more and 10 mol% or less, further preferably 0.5 mol% or more and 10 mol% or less, and particularly preferably 1 mol% or more and 10 mol% or less, for example, 2 mol% or more and 10 mol% or less, or 5 mol% or more and 10 mol% or less. With the compound of the formula (2A) being within such a range, friction durability can be more increased.

The fluoropolyether group-containing compound of the formula (1A) or the formula (2A) is not limited, but may have an average molecular weight of 5 × 10² to 1 × 10⁵. In particular, the compound preferably has an average molecular weight of 2,000 to 32,000, and more preferably 2,500 to 12,000, from the viewpoint of friction durability. The "average molecular weight" refers to a number average molecular weight, and the "average molecular weight" is a value obtained by ¹⁹F-NMR measurement.

The component (A) is contained in the surface-treating agent in an amount of 40 to 90% by mass, preferably 40 to 80% by mass, more preferably 50 to 80% by mass, still more preferably 60 to 80% by mass, for example 65 to 75% by mass, based on the total of the component (A), the component (B), and the component (C). With the content of the component (A) being within the above range, the friction durability of the surface-treating layer can be further improved.

### (Component (B): fluoropolyether group-containing compound)

The fluoropolyether group-containing compound is at least one fluoropolyether group-containing compound of the following formula (1B) or (2B):

**Rf^{1B}_{α2}-X^{B}-R^{B}_{β2}** **(1B)**

**R^{B}_{γ2}-X^{B}-Rf^{2B}-X^{B}-R^{B}_{γ2}** **(2B)**

wherein
Rf^{1B} is each independently at each occurrence Rf¹-R^{F}-O_{q}-;
Rf^{2B} is -Rf²ₚ-R^{F}-O_{q}-;
Rf¹ is each independently at each occurrence a C₁₋₁₆ alkyl group optionally substituted with one or more fluorine atoms;
Rf² is a C₁₋₆ alkylene group optionally substituted with one or more fluorine atoms;
R^{F} is each independently at each occurrence a divalent fluoropolyether group;
p is 0 or 1;
q is each independently at each occurrence 0 or 1;
R^{B} is each independently at each occurrence a group of the following formula (S2): 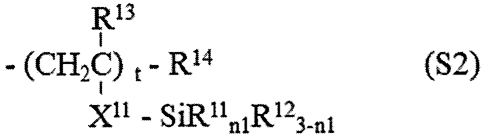 wherein R¹¹ is each independently at each occurrence a hydroxyl group or a hydrolyzable group;
R¹² is each independently at each occurrence a hydrogen atom or a monovalent organic group;
n1 is each independently an integer of 0 to 3 in each (SiR¹¹ₙ₁R¹²₃₋ₙ₁) unit;
X¹¹ is each independently at each occurrence a single bond or a divalent organic group;
R¹³ is each independently at each occurrence a hydrogen atom or a monovalent organic group;
t is each independently at each occurrence an integer of 2 to 10; and
R¹⁴ is each independently at each occurrence a hydrogen atom or a halogen atom;
at least one R^{B} is a monovalent group containing a Si atom to which a hydroxyl group or a hydrolyzable group is bonded;
X^{B} is each independently a single bond or a di- to decavalent organic group;
α2 is an integer of 1 to 9;
β2 is an integer of 1 to 9; and
γ2 is each independently an integer of 1 to 9.

In the formula, Rf^{1B} is each independently at each occurrence Rf¹-R^{F}-O_{q}-.

In the formula, Rf^{2B} is -Rf²ₚ-R^{F}-O_{q}-.

Rf¹-R^{F}-O_{q}- and -Rf²ₚ-R^{F}-O_{q}- have the same meaning as Rf¹-R^{F}-O_{q}- and -Rf²ₚ-R^{F}-O_{q}- in Rf^{1A} and Rf^{2A} of the formulas (1A) and (2A). However, Rf^{1A} and Rf^{1B}, and Rf^{2A} and Rf^{2B} may be the same or different.

In a preferable embodiment, in the formula (1B) and the formula (2B), R^{F} in Rf^{1B} and Rf^{2B} is a group of the formula (f1).

In the formula, R^{B} is each independently at each occurrence a group of the following formula (S2): 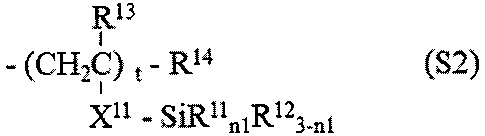 wherein
R¹¹ is each independently at each occurrence a hydroxyl group or a hydrolyzable group;
R¹² is each independently at each occurrence a hydrogen atom or a monovalent organic group;
n1 is each independently an integer of 0 to 3 in each (SiR¹¹ₙ₁R¹²₃₋ₙ₁) unit;
X¹¹ is each independently at each occurrence a single bond or a divalent organic group;
R¹³ is each independently at each occurrence a hydrogen atom or a monovalent organic group;
t is each independently at each occurrence an integer of 2 to 10; and
R¹⁴ is each independently at each occurrence a hydrogen atom or a halogen atom.

In the formula, R¹¹ is each independently at each occurrence a hydroxyl group or a hydrolyzable group.

Preferably, R¹¹ is each independently at each occurrence a hydrolyzable group.

R¹¹ is, each independently at each occurrence, preferably -OR^{h}, -OCOR^{h}, -O-N=CR^{h}₂, -NR^{h}₂, - NHR^{h}, or halogen (wherein R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

In the formula, R¹² is each independently at each occurrence a hydrogen atom or a monovalent organic group. Such a monovalent organic group is a monovalent organic group excluding the hydrolyzable group.

In R¹², the monovalent organic group is preferably a C₁₋₂₀ alkyl group, more preferably a C₁₋₆ alkyl group, and even more preferably a methyl group.

In the formula, n1 is each independently an integer of 0 to 3 in each (SiR¹¹ₙ₁R¹²₃₋ₙ₁) unit. However, at least one (SiR¹¹ₙ₁R¹²₃₋ₙ₁) unit in which n1 is 1 to 3 is present in the terminal R^{B} moieties of the formula (1B) and the formula (2B) (hereinafter, also simply referred to as "terminal moieties" of the formula (1B) and the formula (2B)). That is, in such terminal moieties, not all n1 are 0 at the same time. In other words, in the terminal moieties of the formula (1B) and the formula (2B), at least one Si atom to which a hydroxyl group or a hydrolyzable group is bonded is present.

n1 is preferably an integer of 1 to 3, more preferably 2 to 3, and still more preferably 3, each independently in each (SiR¹¹ₙ₁R¹²₃₋ₙ₁) unit.

In the formulae, X¹¹ is each independently at each occurrence a single bond or a divalent organic group. Such a divalent organic group is preferably a C₁₋₂₀ alkylene group. Such a C₁₋₂₀ alkylene group may be linear or branched, and is preferably linear.

In a preferable embodiment, X¹¹ is each independently at each occurrence a single bond or a linear C₁₋₆ alkylene group, preferably a single bond or a linear C₁₋₃ alkylene group, more preferably a single bond or a linear C₁₋₂ alkylene group, and still more preferably a linear C₁₋₂ alkylene group.

In the formula, R¹³ is each independently at each occurrence a hydrogen atom or a monovalent organic group. Such a monovalent organic group is preferably a C₁₋₂₀ alkyl group. Such a C₁₋₂₀ alkyl group may be linear or branched, and is preferably linear.

In a preferable embodiment, R¹³ is each independently at each occurrence a hydrogen atom or a linear C₁₋₆ alkyl group, preferably a hydrogen atom or a linear C₁₋₃ alkyl group, and preferably a hydrogen atom or a methyl group.

In the formula, t is each independently at each occurrence an integer of 2 to 10.

In a preferable embodiment, t is each independently at each occurrence an integer of 2 to 6.

In the formula, R¹⁴ is each independently at each occurrence a hydrogen atom or a halogen atom. Such a halogen atom is preferably an iodine atom, a chlorine atom, or a fluorine atom, and more preferably a fluorine atom. In a preferable embodiment, R¹⁴ is a hydrogen atom.

In the formulas (1B) and (2B), X^{B} is interpreted as a linker, connecting a fluoropolyether moiety (Rf^{1B} and Rf^{2B}) which mainly provides, e.g., water-repellency and surface lubricity, and a moiety (R^{B}) providing binding ability to a substrate. Accordingly, X^{B} may be a single bond or any group as long as the compounds of the formulas (1B) and (2B) can stably exist.

In the formula (1B), α2 is an integer of 1 to 9, and β2 is an integer of 1 to 9. The integers represented by α2 and β2 may vary depending on the valence of X^{A}. The sum of α2 and β2 is the same as the valence of X^{B}. For example, when X^{B} is a decavalent organic group, the sum of α2 and β2 is 10; for example, a case where α2 is 9 and β2 is 1, and α2 is 5 and β2 is 5, or α2 is 1 and β2 is 9, can be considered. When X^{B} is a divalent organic group, α2 and β2 each are 1.

In the formula (2B), γ2 is an integer of 1 to 9. γ2 may vary depending on the valence of X^{B}. That is, γ2 is a value obtained by subtracting 1 from the valence of X^{B}.

X^{B} is each independently a single bond or a di- to decavalent organic group.

The di- to decavalent organic group in X^{B} is preferably a di- to octavalent organic group. In one embodiment, such a di- to decavalent organic group is preferably a di- to tetravalent organic group, and more preferably a divalent organic group. In another embodiment, the di- to decavalent organic group is preferably a tri- to octavalent organic group, and more preferably a tri- to hexavalent organic group.

In one embodiment, X^{B} is a single bond or a divalent organic group, α2 is 1, and β2 is 1.

In one embodiment, X^{B} is a single bond or a divalent organic group, and γ2 is 1.

When X^{B} is a single bond or a divalent organic group, the formulas (1B) and (2B) are of the following formulas (1B') and (2B').

**Rf^{1B}-X^{B}-R^{B}** **(1B')**

**R^{B}-X^{B}-Rf^{2B}-X^{B}-R^{B}** **(2B')**

In one embodiment, X^{B} is a tri- to hexavalent organic group, α2 is 1, and β2 is 2 to 5.

In one embodiment, X^{B} is a tri- to hexavalent organic group, and γ2 is 2 to 5.

In one embodiment, X^{B} is a trivalent organic group, α2 is 1, and β2 is 2.

In one embodiment, X^{B} is a trivalent organic group, and γ2 is 2.

X^{B} has the same definition as X^{A}. However, X^{A} and X^{B} may be the same or different.

In a preferable embodiment, X^{B} is each independently a group of the formula: -(R¹⁶)ₓ₁-(CFR¹⁷)_{y1}-(CH₂)_{z1}-. In the formula, x1, y1, and z1 are each independently an integer of 0 to 10, the sum of x1, y1, and z1 is 1 or more, and the occurrence order of the respective repeating units enclosed in parentheses is not limited in the formulas.

In one embodiment, the fluoropolyether group-containing compound of the component (B) in the surface-treating agent of the present disclosure is a compound of the formula (1B).

In another embodiment, the fluoropolyether group-containing compound of the component (B) in the surface-treating agent of the present disclosure is a compound of the formula (2B).

In another embodiment, the fluoropolyether group-containing compound in the surface-treating agent of the present disclosure is the compound of the formula (1B) and the compound of the formula (2B).

In the surface-treating agent of the present disclosure, the compound of the formula (2B) is preferably 0.1 mol% or more and 35 mol% or less based on the total of the compound of the formula (1B) and the compound of the formula (2B). The lower limit of the content of the compound of the formula (2B) based on the total of the compound of the formula (1B) and the compound of the formula (2B) may be preferably 0.1 mol%, more preferably 0.2 mol%, still more preferably 0.5 mol%, and further preferably 1 mol%, particularly preferably 2 mol%, and especially 5 mol%. The upper limit of the content of the compound of the formula (2B) based on the total of the compound of the formula (1B) and the compound of the formula (2B) may be preferably 35 mol%, more preferably 30 mol%, still more preferably 20 mol%, and further preferably 15 mol% or 10 mol%. The compound of the formula (2B) based on the total of the compound of the formula (1B) and the compound of the formula (2B) is preferably 0.1 mol% or more and 30 mol% or less, more preferably 0.1 mol% or more and 20 mol% or less, still more preferably 0.2 mol% or more and 10 mol% or less, further preferably 0.5 mol% or more and 10 mol% or less, and particularly preferably 1 mol% or more and 10 mol% or less, for example, 2 mol% or more and 10 mol% or less, or 5 mol% or more and 10 mol% or less. With the compound of the formula (2B) being within such a range, friction durability can be more increased.

The fluoropolyether group-containing compound of the formula (1B) or the formula (2B) is not limited, but may have an average molecular weight of 5 × 10² to 1 × 10⁵. In particular, the compound preferably has an average molecular weight of 2,000 to 32,000, and more preferably 2,500 to 12,000, from the viewpoint of friction durability. The "average molecular weight" refers to a number average molecular weight, and the "average molecular weight" is a value obtained by ¹⁹F-NMR measurement.

The component (B) is contained in the surface-treating agent in an amount of 1 to 50% by mass, more preferably 5 to 30% by mass, still more preferably 5 to 20% by mass, further preferably 10 to 15% by mass, based on the total of the component (A), the component (B), and the component (C). With the content of the component (B) being within the above range, the friction durability of the surface-treating layer can be further improved.

### (Component (C): fluorine-containing oil)

Examples of the fluorine-containing oil include, but are not limited to, a compound (perfluoro(poly)ether compound) of the following general formula (C):

Rf⁵-(OC₄F₈)_{a'}-(OC₃F₆)_{b'}-(OC₂F₄)_{c'}-(OCF₂)_{d'}-Rf⁶ ... (C)

wherein Rf⁵ represents an alkyl group having 1 to 16 carbon atoms optionally substituted with one or more fluorine atoms (preferably, C₁₋₁₆ perfluoroalkyl group), Rf⁶ represents an alkyl group having 1 to 16 carbon atoms optionally substituted with one or more fluorine atoms (preferably, C₁₋₁₆ perfluoroalkyl group), a fluorine atom, or a hydrogen atom, and Rf⁵ and Rf⁶ are each independently, more preferably, a C₁₋₃ perfluoroalkyl group.

In the formula, a', b', c' and d' respectively represent the numbers of four repeating units in perfluoro(poly)ether constituting a main backbone of the polymer and are mutually independently an integer of 0 or more and 300 or less, the sum of a', b', c' and d' is at least 1, preferably 1 to 300, more preferably 20 to 300. The occurrence order of the respective repeating units enclosed in parentheses provided with the subscript a', b', c' or d' is not limited in the formula. Among such repeating units, for example, -(OC₄F₈)-may be any of -(OCF₂CF₂CF₂CF₂)-, -(OCF(CF₃)CF₂CF₂)-, - (OCF₂CF(CF₃)CF₂)-, -(OCF₂CF₂CF(CF₃))-, -(OC(CF₃)₂CF₂)-, - (OCF₂C(CF₃)₂)-, - (OCF(CF₃)CF(CF₃))-, - (OCF(C₂F₅)CF₂)- and - (OCF₂CF(C₂F₅)) - and is preferably - (OCF₂CF₂CF₂CF₂) -. -(OC₃F₆)-may be any of -(OCF₂CF₂CF₂)-, - (OCF(CF₃)CF₂)- and - (OCF₂CF(CF₃))- and is preferably -(OCF₂CF₂CF₂)-. -(OC₂F₄)-may be any of -(OCF₂CF₂)- and -(OCF(CF₃))- and is preferably -(OCF₂CF₂)-.

Examples of the perfluoro(poly)ether compound of the general formula (C) include a compound of any of the following general formulae (Ca) and (Cb) (which may be adopted singly or as a mixture of two or more kinds thereof) .

Rf⁵-(OCF₂CF₂CF₂)_{b"}-Rf⁶ ... (Ca)

Rf⁵-(OCF₂CF₂CF₂CF₂)_{a"}-(OCF₂CF₂CF₂)_{b"}-(OCF₂CF₂)_{c"}-(OCF₂)_{d"}-Rf⁶ ... (Cb)

In these formulas, Rf⁵ and Rf⁶ are as described above; in the formula (Ca), b" is an integer of 1 or more and 100 or less; and in the formula (Cb), a" and b" are each independently an integer of 0 or more and 30 or less, and c" and d" are each independently an integer of 1 or more and 300 or less. The occurrence order of the respective repeating units enclosed in parentheses provided with a subscript a", b", c", or d" is not limited in the formulas.

In a preferable embodiment, the fluorine-containing oil of the component (C) is a fluorine-containing oil of the formula (Cb).

From another viewpoint, the fluorine-containing oil may be a compound of the general formula: Rf³-F wherein Rf³ is a C₅₋₁₆ perfluoroalkyl group. The fluorine-containing oil may be a chlorotrifluoroethylene oligomer.

The fluorine-containing oil may have a number average molecular weight of 500 to 20,000, preferably 1,000 to 15,000, and more preferably 2,000 to 10,000. The molecular weight of the fluorine-containing oil may be measured using GPC.

The component (C) may be contained in the surface-treating agent of the present disclosure in an amount of, for example, 1 to 60% by mass, preferably 5 to 50% by mass, more preferably 10 to 40% by mass, still more preferably 10 to 30% by mass, for example 15 to 20% by mass, based on the total of the component (A), the component (B), and the component (C). With the content of the component (C) being within such a range, friction durability of the resulting surface-treating layer can be more increased.

In a preferable embodiment, based on a total of the component (A), the component (B), and the component (C) in the surface-treating agent,
the content of the component (A) is 40 to 80% by mass, preferably 50 to 80% by mass, more preferably 50 to 75% by mass, still more preferably 65 to 75% by mass,
the content of the component (B) is 5 to 20% by mass, preferably 10 to 15% by mass, and
the content of the component (C) is 10 to 30% by mass, preferably 15 to 20% by mass.

With the contents of the component (A), the component (B), and the component (C) being within such a range, friction durability of the resulting surface-treating layer can be more increased.

The surface-treating agent of the present disclosure may include a solvent, a (unreactive) silicone compound which can be understood as a silicone oil (hereinafter, referred to as "silicone oil"), a catalyst, a surfactant, a polymerization inhibitor, a sensitizer, and the like.

Examples of the solvent include aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, isopropanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide and N,N-dimethylacetamide; ether alcohols such as methyl cellosolve, cellosolve, isopropyl cellosolve, butyl cellosolve, and diethylene glycol monomethyl ether; diethylene glycol monoethyl ether acetate; and fluorine-containing solvents such as 1,1,2-trichloro-1,2,2-trifluoroethane, 1,2-dichloro-1,1,2,2-tetrafluoroethane, dimethyl sulfoxide, 1,1-dichloro-1,2,2,3,3-pentafluoropropane (HCFC 225), Zeorora H, HFE 7100, HFE 7200, and HFE 7300. Alternatively, the solvent may be a mixed solvent of two or more of such solvents.

For example, the silicone oil may be a linear or cyclic silicone oil having 2,000 or less siloxane bonds. The linear silicone oil may be so-called a straight silicone oil or modified silicone oil. Examples of the straight silicone oil include dimethyl silicone oil, methyl phenyl silicone oil, and methyl hydrogen silicone oil. Examples of the modified silicone oil include those obtained by modifying a straight silicone oil with alkyl, aralkyl, polyether, higher fatty acid ester, fluoroalkyl, amino, epoxy, carboxyl, alcohol, or the like. Examples of the cyclic silicone oil include cyclic dimethylsiloxane oil.

In the surface-treating agent of the present disclosure, such a silicone oil may be contained in an amount of, for example, 0 to 300 parts by mass, and preferably 50 to 200 parts by mass, based on total 100 parts by mass of the fluoropolyether group-containing silane compound of the present disclosure (in the case of two or more kinds, the total thereof, and the same applies below).

The silicone oil contributes to increasing the surface lubricity of the surface-treating layer.

Examples of the catalyst include an acid (for example, acetic acid, trifluoroacetic acid), a base (for example, ammonia, triethylamine, diethylamine) and a transition metal (for example, Ti, Ni, Sn).

The catalyst promotes hydrolysis and dehydrative condensation of the fluoropolyether group-containing compound of the component (A) and the component (B), and promotes formation of a layer formed of the surface-treating agent of the present disclosure.

Examples of the other components include, in addition to those described above, tetraethoxysilane, methyltrimethoxysilane, 3-aminopropyltrimethoxysilane, 3-glycidoxypropyltrimethoxysilane, and methyltriacetoxysilane.

The surface-treating agent of the present disclosure can be formed into pellets by impregnating a porous material such as a porous ceramic material or a metal fiber such as a fiber obtained by, for example, solidifying steel wool in a cotton-like form with the composition. Such pellets can be used in, for example, vacuum deposition.

Hereinafter, an article of the present disclosure will be described.

The article of the present disclosure comprises a substrate and a layer on a surface of the substrate, the layer formed of a surface-treating agent comprising the fluoropolyether group-containing silane compound of the present disclosure (surface-treating layer).

The substrate that can be used in the present disclosure may be composed of any suitable material such as glass, a resin (which may be a natural or synthetic resin, for example, a common plastic material, and may be in the form of a plate, a film, or the like), a metal, ceramics, a semiconductor (such as silicon and germanium), a fiber (such as woven fabric and nonwoven fabric), fur, leather, a wood material, a ceramic material, a stone material, or a building material.

For example, when the article to be produced is an optical member, the material constituting the surface of the substrate may be a material for an optical member, such as glass or a transparent plastic. When the article to be produced is an optical member, some layer (or film) such as a hard coat layer or an antireflection layer may be formed on the surface (the outermost layer) of the substrate. The antireflection layer may be any of a single-layer antireflection layer and a multi-layer antireflection layer. Examples of inorganic substances that can be used in the antireflection layer include SiO₂, SiO, ZrO₂, TiO₂, TiO, Ti₂O₃, Ti₂O₅, Al₂O₃, Ta₂O₅, CeO₂, MgO, Y₂O₃, SnO₂, MgF₂, and WO₃. One of these inorganic substances may be used singly, or two or more may be used in combination (for example, as a mixture). In the case of a multi-layer antireflection layer, SiO₂ and/or SiO is preferably used in the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

The shape of the substrate is not limited. The surface region of the substrate on which a surface-treating layer is to be formed may be at least a part of the substrate surface, and may be suitably determined according to the application, specific specifications, and the like of an article to be produced.

The substrate, or at least the surface portion thereof, may be composed of a material originally having a hydroxyl group. Examples of the material include glass as well as metal (in particular, base metal) wherein a natural oxidized film or a thermal oxidized film is formed on the surface, ceramics, semiconductors, and the like. Alternatively, when the substrate has an insufficient amount of a hydroxyl group or when the substrate originally does not have a hydroxyl group as in resin and the like, a pre-treatment may be performed on the substrate to thereby introduce or increase a hydroxyl group on the surface of the substrate. Examples of such a pre-treatment include a plasma treatment (for example, corona discharge) and ion beam irradiation. The plasma treatment can be suitably utilized to not only introduce or increase a hydroxyl group on the substrate surface, but also clean the substrate surface (remove foreign matter and the like). Another example of such a pre-treatment includes a method wherein a monomolecular film of a surface adsorbent having a carbon-carbon unsaturated bonding group is formed on the surface of the substrate by a LB method (a Langmuir-Blodgett method), a chemical adsorption method, or the like beforehand, and thereafter cleaving the unsaturated bond under an atmosphere containing oxygen, nitrogen, or the like.

Alternatively, the substrate may be that of which at least the surface consists of a material comprising other reactive group such as a silicone compound having one or more Si-H group or alkoxysilane.

Then, on the surface of such a substrate, a layer of the above surface-treating agent of the present disclosure is formed, this layer is post-treated as necessary, and thereby a layer is formed from the surface-treating agent of the present disclosure.

The layer of the surface-treating agent of the present disclosure can be formed by applying the above composition on the surface of the substrate such that the composition coats the surface. The coating method is not limited. For example, a wet coating method and a dry coating method can be used.

Examples of the wet coating method include dip coating, spin coating, flow coating, spray coating, roll coating, gravure coating, and similar methods.

Examples of the dry coating method include deposition (usually, vacuum deposition), sputtering, CVD, and similar methods. Specific examples of the deposition method (usually, a vacuum deposition method) include resistive heating, highfrequency heating using electron beam, microwave or the like, ion beam, and similar methods. Specific examples of the CVD method include plasma-CVD, optical CVD, thermal CVD, and similar methods.

Furthermore, coating by an atmospheric pressure plasma method can be performed.

When using the wet coating method, the surface-treating agent of the present disclosure can be applied to the substrate surface after being diluted with a solvent. From the viewpoint of the stability of the composition of the present disclosure and the volatility of solvents, the following solvents are preferably used: perfluoroaliphatic hydrocarbons having 5 to 12 carbon atoms (such as perfluorohexane, perfluoromethylcyclohexane, and perfluoro-1,3-dimethylcyclohexane); polyfluoroaromatic hydrocarbons (such as bis(trifluoromethyl)benzene); polyfluoroaliphatic hydrocarbons (such as C₆F₁₃CH₂CH₃ (such as Asahiklin (registered trademark) AC-6000 manufactured by Asahi Glass Co., Ltd., and 1,1,2,2,3,3,4-heptafluorocyclopentane (such as Zeorora (registered trademark) H manufactured by Zeon Corporation)); alkyl perfluoroalkyl ethers (the perfluoroalkyl group and the alkyl group may be linear or branched) such as hydrofluoroether (HFE) (such as perfluoropropylmethyl ether (C₃F₇OCH₃) (such as Novec (trademark) 7000 manufactured by Sumitomo 3M Limited), perfluorobutyl methyl ether (C₄F₉OCH₃) (such as Novec (trademark) 7100 manufactured by Sumitomo 3M Limited), perfluorobutyl ethyl ether (C₄F₉OC₂H₅) (such as Novec (trademark) 7200 manufactured by Sumitomo 3M Limited), and perfluorohexyl methyl ether (C₂F₅CF(OCH₃)C₃F₇) (such as Novec (trademark) 7300 manufactured by Sumitomo 3M Limited), or CF₃CH₂OCF₂CHF₂ (such as Asahiklin (registered trademark) AE-3000 manufactured by Asahi Glass Co., Ltd.)). One of these solvents can be used singly, or two or more can be used as a mixture. In particular, hydrofluoroether is preferable, and perfluorobutyl methyl ether (C₄F₉OCH₃) and/or perfluorobutyl ethyl ether (C₄F₉OC₂H₅) is particularly preferable.

When using the dry coating method, the surface-treating agent of the present disclosure may be directly subjected to the dry coating method, or may be diluted with the above solvent before being subjected to the dry coating method.

A layer of the surface-treating agent is preferably formed such that the surface-treating agent of the present disclosure coexists in the layer with a catalyst for hydrolysis and dehydrative condensation. Conveniently, in the case of a wet coating method, the surface-treating agent of the present disclosure is diluted with a solvent, and then, immediately before application to the substrate surface, a catalyst may be added to the diluent of the surface-treating agent of the present disclosure. In the case of a dry coating method, the surface-treating agent of the present disclosure to which a catalyst has been added is directly used to a deposition (usually vacuum deposition) treatment, or a pellet-like material may be used to a deposition (usually vacuum deposition) treatment, wherein the pellet is obtained by impregnating a porous body of metal such as iron or copper with the surface-treating agent of the present disclosure to which the catalyst has been added.

The catalyst may be any suitable acid or base. The acid catalyst may be, for example, acetic acid, formic acid, or trifluoroacetic acid. The base catalyst may be, for example, ammonia or organic amine.

In the above-described manner, a layer derived from the surface-treating agent of the present disclosure is formed on the substrate surface, and the article of the present disclosure is produced. The layer thus obtained has both high surface lubricity and high friction durability. The above layer may have not only high friction durability but also have, depending on the compositional features of the surface-treating agent used, water-repellency, oil-repellency, antifouling property (for example, preventing fouling such as fingerprints from adhering), waterproof property (preventing water from penetrating into electronic components and the like), surface lubricity (or lubricity, such as wiping property for fouling including fingerprints and the like and excellent tactile sensations to the fingers), and the like, and may be suitably utilized as a functional thin film.

That is, the present disclosure further relates to an optical material having the surface-treating layer in the outermost layer.

The optical material preferably includes a wide variety of optical materials in addition to optical materials relating to displays and the like as exemplified below: for example, displays such as cathode ray tubes (CRTs; e.g., PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The article having a layer obtained according to the present disclosure may be, but is not limited to, an optical member. Examples of the optical member include lenses of glasses or the like; front surface protective plates, antireflection plates, polarizing plates, and anti-glare plates for displays such as PDPs and LCDs; touch panel sheets for devices such as mobile phones and personal digital assistants; disc surfaces of optical discs such as Blu-ray (registered trademark) discs, DVD discs, CD-Rs, and MOs; optical fibers; and display surfaces of watches and clocks.

The article having a layer obtained according to the present disclosure may be medical equipment or a medical material.

The thickness of the above layer is not limited. The thickness of the above layer in the case of an optical member is in the range of 1 to 50 nm, preferably 1 to 30 nm, and more preferably 1 to 15 nm, from the viewpoint of optical performance and friction durability.

The present disclosure has been described above in detail. The surface-treating agent and the article of the present disclosure, and the method for producing these, and the like are not limited to those exemplified above.

### Examples

Hereinafter, the present disclosure will be described by way of Examples, but the present disclosure is not intended to be limited to the following Examples. In Examples, all chemical formulae shown below indicate average compositional features, and the occurrence order of repeating units (such as (CF₂CF₂CF₂O), (CF₂CF₂O), and (CF₂O)) constituting perfluoropolyether is not limited.

The following compounds were prepared as surface-treating compounds. 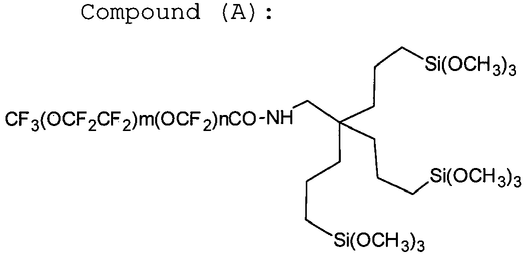 (m ≈ 21, n ≈ 35) (the average composition included 0.27 repeating units of (CF₂CF₂CF₂CF₂O) and 0.42 repeating units of (CF₂CF₂CF₂O), but these were omitted due to their small amount. Further, a compound having -C(CH₂CH₂CH₂Si(OCH₃)₃ at both ends was contained in an amount of 3.2%, but was omitted due to its small amount.) 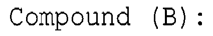 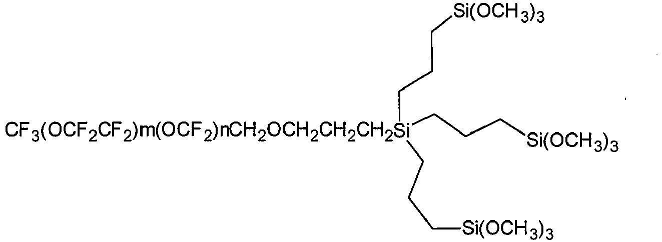 (m ≈ 23, n ≈ 22) (the average composition included 0.17 repeating units of (CF₂CF₂CF₂CF₂O) and 0.18 repeating units of (CF₂CF₂CF₂O), but these were omitted due to their small amount. Further, a compound having -Si(CH₂CH₂CH₂Si(OCH₃)₃ at both ends was contained in an amount of 2.2%, but was omitted due to its small amount.) 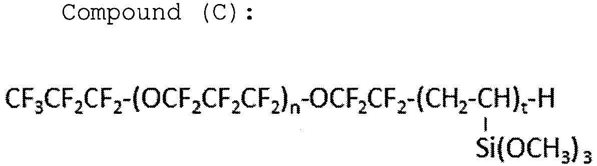 (n ≈ 20, t = 1 to 6, and mean is about 3)

### Compound (D): CF₃(OCF₂CF₂)ₘ(OCF₂)ₙOCF₃ (m ≈ 22, n ≈ 21)

The compound (A) was dissolved in hydrofluoroether (Novec HFE-7200, manufactured by 3M) such that the concentration was 0.1% by mass to prepare a diluent (1).

The compound (B) was dissolved in hydrofluoroether (Novec HFE-7200, manufactured by 3M) such that the concentration was 0.1% by mass to prepare a diluent (2).

The compound (C) was dissolved in hydrofluoroether (Novec HFE-7200, manufactured by 3M) such that the solid concentration was 0.1% by mass to prepare a diluent (3).

The compound (D) was dissolved in hydrofluoroether (Novec HFE-7200, manufactured by 3M) such that the solid concentration was 0.1% by mass to prepare a diluent (4).

### (Preparation of surface-treating agent)

The diluents 1 to 4 were mixed at the ratios shown in Table 1 below to prepare surface-treating agent 1 to 8. Surface-treating agents 1 and 2 are Examples, and surface-treating agents 3 to 8 are Comparative Examples.

**[Table 1]**

| Surface-treating agent | Diluent 1 | Diluent 2 | Diluent 3 | Diluent 4 |
|---|---|---|---|---|
| 1 | 70 | - | 10 | 20 |
| 2 | 70 | - | 15 | 15 |
| 3 | 70 | - | 30 | - |
| 4 | 70 | - | - | 30 |
| 5 | - | 70 | 15 | 15 |
| 6 | 100 | - | - | - |
| 7 | - | 100 | - | - |
| 8 | - | - | 100 | - |

### (Formation of surface-treating layer)

Surface-treating agents 1 to 8 prepared as described above were vacuum-deposited to a chemically tempered glass ("Gorilla" glass, manufactured by Corning Incorporated, thickness 0.7 mm). The conditions of the vacuum deposition method were a resistance heating type vapor deposition machine (manufactured by Shincron), a chamber size of 1,900 mmϕ, a vacuum degree of 5.0 E-05, a current value of 240 A, a voltage of 10 V, and a substrate temperature of 40°C. Next, the chemically tempered glass with a deposited film was left to stand in an atmosphere at a temperature of 150°C for 30 minutes, and then allowed to cool to room temperature to form a surface-treating layer on the glass substrate.

### (Evaluation of surface-treating layer properties)

Properties of the resulting surface-treating layer were evaluated as follows. The results are shown in Table 2.

### <Static contact angle>

### (Initial evaluation)

First, as an initial evaluation, after the surface-treating layer was formed, the static water contact angle of the surface with which nothing was brought into contact yet was measured.

### <Friction durability test against eraser>

Using a rubbing tester (manufactured by Shinto Scientific Co., Ltd.), the water resistance contact angle was measured every 2,500 rubs under the following conditions, and the test was continued until it reached 10,000 rubs or until the angle became less than 100°. The test environment conditions were 25°C and a humidity of 40% RH.
Eraser: Raber Eraser (manufactured by Minoan)
Contact area: 6 mmϕ
Moving distance (one way): 30 mm
Moving speed: 3,600 mm/min
Load: 1 kg/6 mmϕ

**[Table 2]**

| | 0 times | 3,000 times | 6,000 times | 9,000 times | 12,000 times | 15,000 times |
|---|---|---|---|---|---|---|
| Surface-treating agent 1 | 115 | 113 | 109 | 106 | 104 | 102 |
| Surface-treating agent 2 | 115 | 106 | 102 | 100 | - | - |
| Surface-treating agent 3 | 114 | 100 | - | - | - | - |
| Surface-treating agent 4 | 114 | 96 | - | - | - | - |
| Surface-treating agent 5 | 114 | 100 | - | - | - | - |
| Surface-treating agent 6 | 115 | 108 | 100 | - | - | - |
| Surface-treating agent 7 | 115 | 85 | - | - | - | - |
| Surface-treating agent 8 | 113 | 54 | - | - | - | - |

From the above results, it was confirmed that the surface-treating agents 1 and 2 containing the compound (A), the compound (C), and the compound (D) in combination have high friction durability in comparison with the surface-treating agents 6 and 8 containing the compound (A) and the compound (C) alone, respectively, and the surface-treating agents 3 and 4 containing the compound (A) and the compound (C) in combination and the compound (A) and the compound (D) in combination, respectively. That is, it was confirmed that the friction durability was synergistically improved by combining the compound (C) and the compound (D) with the compound (A). The surface-treating agent containing only the compound (D) could not form a stable surface-treating layer.

### Industrial Applicability

The article of the present disclosure can be suitably used in various applications, for example, as an optical member such as a touch panel.

## Claims

1. A surface-treating agent comprising:
a component (A): at least one fluoropolyether group-containing compound of the following formula (1A) or (2A):
Rf^{1A} _{α1} -X^{A} - R^{A} _{β1} (1A)
R^{A}_{γ1} **- X^{A}** - Rf^{2A} - **X^{A}** -R^{A}_{γ1} (2A)
wherein
Rf^{1A} is each independently at each occurrence Rf¹-R^{F}-O_{q}-;
Rf^{2A} is -Rf²ₚ-R^{F}-O_{q}-;
Rf¹ is each independently at each occurrence a C₁₋₁₆ alkyl group optionally substituted with one or more fluorine atoms;
Rf² is a C₁₋₆ alkylene group optionally substituted with one or more fluorine atoms;
R^{F} is each independently at each occurrence a divalent fluoropolyether group;
p is 0 or 1;
q is each independently at each occurrence 0 or 1;
R^{A} is each independently at each occurrence a group of the following formula (S1):
-CR^{d1}ₖ₂R^{e1}₁₂R^{f1}ₘ₂ (S1)
wherein:
R^{d1} is each independently at each occurrence -Z²-CR³¹ₚ₂R³²_{q2}R³³ᵣ₂;
Z² is each independently at each occurrence a single bond, an oxygen atom, or a divalent organic group;
R³¹ is each independently at each occurrence -Z²'-CR^{32'}q_{2'}R³³'_{r2'};
R³² is each independently at each occurrence -Z³-SiR³⁴ₙ₂R³⁵₃₋ₙ₂ ;
R³³ is each independently at each occurrence a hydrogen atom, a hydroxyl group, or a monovalent organic group;
p2 is each independently at each occurrence an integer of 0 to 3;
q2 is each independently at each occurrence an integer of 0 to 3;
r2 is each independently at each occurrence an integer of 0 to 3;
Z²' is each independently at each occurrence a single bond, an oxygen atom, or a divalent organic group;
R³²' is each independently at each occurrence -Z³-SiR³⁴ₙ₂R³⁵₃₋ₙ₂;
R³³' is each independently at each occurrence a hydrogen atom, a hydroxyl group, or a monovalent organic group;
q2' is each independently at each occurrence an integer of 0 to 3;
r2' is each independently at each occurrence an integer of 0 to 3;
Z³ is each independently at each occurrence a single bond, an oxygen atom, or a divalent organic group;
R³⁴ is each independently at each occurrence a hydroxyl group or a hydrolyzable group;
R³⁵ is each independently at each occurrence a hydrogen atom or a monovalent organic group;
n2 is each independently at each occurrence an integer of 0 to 3;
R^{e1} is each independently at each occurrence -Z³-SiR³⁴ₙ₂R³⁵₃₋ₙ₂ ;
R^{f1} is each independently at each occurrence a hydrogen atom, a hydroxyl group, or a monovalent organic group;
k2 is each independently at each occurrence an integer of 0 to 3;
12 is each independently at each occurrence an integer of 0 to 3; and
m2 is each independently at each occurrence an integer of 0 to 3;
at least one R^{A} is a monovalent group containing a Si atom to which a hydroxyl group or a hydrolyzable group is bonded;
X^{A} is each independently a single bond or a di- to decavalent organic group;
α1 is an integer of 1 to 9;
β1 is an integer of 1 to 9; and
γ1 is each independently an integer of 1 to 9;
a component (B): at least one fluoropolyether group-containing compound of the following formula (1B) or (2B):
**RF^{1B} _{α2} - X^{B} -R^{B} _{β2}** **(1B)**
**R^{B} _{γ2}-X^{B} - Rf^{2B} -X^{B} - R^{B}γ₂** **(2B**)
wherein:
Rf^{1B} is each independently at each occurrence Rf¹-R^{F}-O_{q}- ;
Rf^{2B} is -Rf²ₚ-R^{F}-O_{q}-;
Rf¹ is each independently at each occurrence a C₁₋₁₆ alkyl group optionally substituted with one or more fluorine atoms;
Rf² is a C₁₋₆ alkylene group optionally substituted with one or more fluorine atoms;
R^{F} is each independently at each occurrence a divalent fluoropolyether group;
p is 0 or 1;
q is each independently at each occurrence 0 or 1;
R^{B} is each independently at each occurrence a group represented by the following formula (S2): 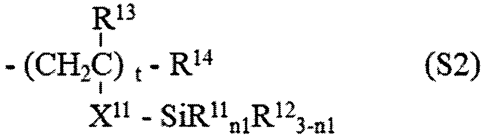 wherein:
R¹¹ is each independently at each occurrence a hydroxyl group or a hydrolyzable group;
R¹² is each independently at each occurrence a hydrogen atom or a monovalent organic group;
n1 is each independently an integer of 0 to 3 in each (SiR¹¹ₙ₁R¹²₃₋ₙ₁) unit;
X¹¹ is each independently at each occurrence a single bond or a divalent organic group;
R¹³ is each independently at each occurrence a hydrogen atom or a monovalent organic group;
t is each independently at each occurrence an integer of 2 to 10; and
R¹⁴ is each independently at each occurrence a hydrogen atom or a halogen atom;
at least one R^{B} is a monovalent group containing a Si atom to which a hydroxyl group or a hydrolyzable group is bonded;
X^{B} is each independently a single bond or a di- to decavalent organic group;
α2 is an integer of 1 to 9;
β2 is an integer of 1 to 9; and
γ2 is each independently an integer of 1 to 9; and
a component (C): one or more fluorine-containing oils.

2. The surface-treating agent according to claim 1, wherein 12 is 2 and m2 is 1, or 12 is 3.

3. The surface-treating agent according to claim 1 or 2, wherein 12 is 3.

4. The surface-treating agent according to any one of claims 1 to 3, wherein R^{F} is each independently at each occurrence a group of the formula:
- (OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}- wherein:
R^{Fa} is each independently at each occurrence a hydrogen atom, a fluorine atom, or a chlorine atom; and
a, b, c, d, e and f are each independently an integer of 0 to 200, the sum of a, b, c, d, e and f is 1 or more, and the occurrence order of the respective repeating units enclosed in parentheses provided with a, b, c, d, e or f is not limited in the formula.

5. The surface-treating agent according to claim 4, wherein R^{Fa} is a fluorine atom.

6. The surface-treating agent according to any one of claims 1 to 5, wherein R^{F} is each independently at each occurrence a group of the following formula (fl), (f2), (f3), (f4), or (f5):
-(OC₃F₆)_{d}- (f1)
wherein d is an integer of 1 to 200;
- (OC₄F₈) _{c}⁻ (OC₃F₆) _{d}⁻ (OC₂F₄) ₑ⁻ (OCF₂) _{f}⁻ (f2)
wherein c and d are each independently an integer of 0 to 30;
e and f are each independently an integer of 1 to 200;
the sum of c, d, e, and f is an integer of 10 to 200; and
the occurrence order of the respective repeating units enclosed in parentheses provided with a subscript c, d, e, or f is not limited in the formula;
- (R⁶-R⁷) g⁻ (f3)
wherein R⁶ is OCF₂ or OC₂F₄;
R⁷ is a group selected from OC₂F₄, OC₃F₆, OC₄F₈, OC₅F₁₀, and OC₆F₁₂, or is a combination of two or three groups selected from these groups; and
g is an integer of 2 to 100;
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f4)
wherein e is an integer of 1 or more and 200 or less, a, b, c, d, and f are each independently an integer of 0 or more and 200 or less, and the occurrence order of the respective repeating units enclosed in parentheses provided with a, b, c, d, e, or f is not limited in the formula; and
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
wherein f is an integer of 1 or more and 200 or less, a, b, c, d, and e are each independently an integer of 0 or more and 200 or less, and the occurrence order of the respective repeating units enclosed in parentheses provided with a, b, c, d, e, or f is not limited in the formula.

7. The surface-treating agent according to any one of claims 1 to 6, wherein in the formulas (1A) and (2A), R^{F} is each independently at each occurrence a group of the formula (f2) :
- (OC₄F₈) _{c}⁻ (OC₃F₆) _{d}⁻ (OC₂F₄) ₑ⁻ (OCF₂) _{f}⁻ (f2)
wherein c and d are each independently an integer of 0 to 30;
e and f are each independently an integer of 1 to 200;
the sum of c, d, e, and f is an integer of 10 to 200; and
the occurrence order of the respective repeating units enclosed in parentheses provided with a subscript c, d, e, or f is not limited in the formula, and
in the formulas (1B) and (2B), R^{F} is each independently at each occurrence a group of the formula (f1):
-(OC₃F₆)_{d}- (f1)
wherein d is an integer of 1 to 200.

8. The surface-treating agent according to any one of claims 1 to 7, wherein α1, β1, and γ1 are 1, and α2, β2, and γ2 are 1.

9. The surface-treating agent according to any one of claims 1 to 8, wherein the fluorine-containing oil is a perfluoro(poly)ether compound of the following formula (C):
Rf⁵-(OC₄F₈)_{a'}⁻(OC₃F₆) _{b'}⁻(OC₂F₄)_{c}'-(OCF₂)_{d'}-Rf⁶ ... (C)
wherein:
Rf⁵ represents an alkyl group having 1 to 16 carbon atoms optionally substituted with one or more fluorine atoms;
Rf⁶ represents an alkyl group having 1 to 16 carbon atoms optionally substituted with one or more fluorine atoms, a fluorine atom, or a hydrogen atom; and
a', b', c', and d' are each independently an integer of 0 or more and 300 or less, the sum of a', b', c', and d' is at least 1, and the occurrence order of the respective repeating units enclosed in parentheses provided with a subscript a', b', c', or d' is not limited in the formula.

10. The surface-treating agent according to any one of claims 1 to 9, wherein a content of the component (A) is 40 to 90% by mass based on a total of the component (A), the component (B), and the component (C) in the surface-treating agent.

11. The surface-treating agent according to any one of claims 1 to 10, wherein, based on a total of the component (A), the component (B), and the component (C) in the surface-treating agent,
a content of the component (A) is 40 to 80% by mass;
a content of the component (B) is 5 to 20% by mass; and
a content of the component (C) is 10 to 30% by mass.

12. The surface-treating agent according to any one of claims 1 to 11, further comprising one or more other components selected from a silicone oil and a catalyst.

13. The surface-treating agent according to any one of claims 1 to 12, further comprising a solvent.

14. The surface-treating agent according to any one of claims 1 to 13, which is used as an antifouling coating agent or a water-proof coating agent.

15. The surface-treating agent according to any one of claims 1 to 14, which is for vacuum deposition.

16. A pellet comprising the surface-treating agent according to any one of claims 1 to 15.

17. An article comprising:
a substrate; and
a layer on a surface of the substrate, wherein the layer is formed of the surface-treating agent according to any one of claims 1 to 15.
